# EUROPÄISCHE PATENTSCHRIFT

(11) **EP 3 156 205 B1**
(45) Veröffentlichungstag und Bekanntmachung des Hinweises auf die Patenterteilung: **18.08.2021**
(21) Anmeldenummer: 16200053.3
(22) Anmeldetag: 26.11.2014
(51) Int. Cl.: B29C 49/48, B29C 31/00, B29C 49/06, B29C 49/12, B29C 49/36

(54) **BLASFORMMASCHINE MIT WECHSELROBOTER UND GREIFEINRICHTUNG UND VERFAHREN ZU DEREN BETRIEB**
BLOW-MOULDING MACHINE WITH CHANGE ROBOTS AND GRIPPING DEVICE AND METHOD FOR THE OPERATION OF SAME
MACHINE DE FORMAGE PAR SOUFFLAGE ÉQUIPÉE DE ROBOTS DE REMPLACEMENT ET D'UN DISPOSITIF DE PRÉHENSION, ET SON PROCÉDÉ DE FONCTIONNEMENT

(30) Priorität: 26.11.2013 DE 102013113074
(43) Veröffentlichungstag der Anmeldung: 19.04.2017
(62) Teilanmeldung aus: 14194892.7
(73) Patentinhaber: Krones AG, 93073 Neutraubling (DE)
(72) Erfinder: Finger, Dieter, 93073 Neutraubling (DE); Geltinger, Florian, 93073 Neutraubling (DE); Schwoed, Gerhard, 93073 Neutraubling (DE); Voth, Klaus, 93073 Neutraubling (DE); Philipp, Thomas, 93073 Neutraubling (DE)
(74) Vertreter: Bittner, Bernhard

(56) Entgegenhaltungen:
- EP-A2- 2 292 402
- WO-A1-2012/120031
- WO-A1-2013/060549
- AT-A1- 503 196
- FR-A1- 2 990 639

## Beschreibung

Die vorliegende Erfindung bezieht sich auf eine Vorrichtung zum Umformen von Kunststoffvorformlingen zu Kunststoffbehältnissen. Derartige Vorrichtungen sind aus dem Stand der Technik seit langem bekannt. Dabei werden erwärmte Kunststoffvorformlinge üblicherweise durch Beaufschlagung mit Luftdruck zu Kunststoffbehältnissen wie Kunststoffflaschen umgeformt. Zu diesem Zweck ist üblicherweise an einem drehbaren Träger eine Vielzahl von Umformungsstationen bzw. Blasstationen angeordnet. Diese Blasstationen weisen dabei jeweils Blasformen auf, die einen Hohlraum aufweisen, innerhalb dessen die Kunststoffvorformlinge zu den Kunststoffbehältnissen umgeformt werden. Diese Blasformen weisen damit ein Negativ des herzustellenden Behältnisses auf. Falls die Vorrichtung auf andere Behältnisse umgestellt werden soll, müssen die einzelnen Blasformen ausgewechselt werden. Im Stand der Technik werden diese Blasformen einzeln von den jeweiligen Umformungsstationen entnommen. Ein Bediener nimmt dabei die einzelnen Blasformeinrichtungen heraus und ersetzt sie durch neue Blasformeinrichtungen, welche die entsprechenden neuen Behältnisse formen sollen. Daher dauert der Wechselvorgang relativ lange und es ist auch ein Bediener notwendig.

Vorrichtungen und Verfahren nach den Oberbegriffen der unabhängigen Ansprüchen werden in WO2012120031 A1, EP2292402A2 und FR2990639A1 offenbart.

Der vorliegenden Erfindung liegt daher die Aufgabe zugrunde, eine derartige Umstellung von Blasformmaschinen zu vereinfachen. Insbesondere sollen auch entsprechende Wechselvorgänge beschleunigt werden.

Diese Aufgaben werden erfindungsgemäß durch die Gegenstände der unabhängigen Ansprüche erreicht. Vorteilhafte Ausführungsformen und Weiterbildungen sind Gegenstand der Unteransprüche.

Erfindungsgemäß weist die Vorrichtung eine Wechseleinrichtung auf, welche geeignet und dazu bestimmt ist, zumindest die Blasformeinrichtungen von deren Blasformträger zu entfernen und/oder Blasformeinrichtungen an den Blasformträgern anzuordnen, wobei diese Wechseleinrichtung eine Greifeinrichtung zum Greifen der Blasformeinrichtung aufweist, wobei diese Greifeinrichtung in wenigstens zwei unterschiedliche Richtungen beweglich ist.

Es wird daher im Rahmen der Erfindung vorgeschlagen, dass eine Greifeinrichtung vorgesehen ist, die insbesondere auch zum Greifen der Blasformeinrichtungen dient. Diese kann in zwei unterschiedliche Richtungen bewegbar sein und dabei insbesondere in Richtungen, die nicht zueinander parallel oder gegengleich sind.

Vorteilhaft ist die Greifeinrichtung um wenigstens drei unterschiedliche Achsen schwenkbar. Vorteilhaft kann dabei die Greifeinrichtung um mehr als drei, vorzugsweise um wenigstens vier, vorzugsweise um wenigstens 5 und besonders bevorzugt um wenigstens sechs Schwenkachsen schwenkbar sein.

Bei einer weiteren vorteilhaften Ausführungsform ist die Greifeinrichtung an einem um eine vorgegebene erste Schwenkachse schwenkbaren Arm angeordnet. Dieser Arm wird im Folgenden aufgrund seiner Anordnung in der Wechseleinrichtung auch als zweiter Arm bezeichnet. Dabei kann die Greifeinrichtung selbst wiederum schwenkbar bzw. drehbar an diesem Arm angeordnet sein.

Bei einer weiteren vorteilhaften Ausführungsform ist der schwenkbare (zweite) Arm an einem weiteren um eine vorgegebene zweite Schwenkachse schwenkbaren Arm angeordnet. Dieser weitere Arm wird im Folgenden auch aufgrund seiner Anordnung in der Wechseleinrichtung als erster Arm bezeichnet. Dabei ist die erste Schwenkachse vorteilhaft nicht parallel zu der zweiten Schwenkachse und besonders bevorzugt windschief im mathematischen Sinne. Bereits durch diese beiden Achsen können zwei Freiheitsgrade der Bewegung der Greifeinrichtung erreicht werden. Vorteilhaft ist die Greifeinrichtung schwenkbar an dem zweiten Arm angeordnet. Durch diese schwenkbare Anordnung wird ein weiterer Freiheitsgrad in der Bewegung ermöglicht. Vorteilhaft ist die Greifeinrichtung um zwei Achsen bezüglich des zweiten Arms schwenkbar, beispielsweise um eine Achse, welche in der Richtung dieses Arms verläuft und auch um eine hierzu senkrechte Achse.

Vorteilhaft ist die Greifeinrichtung damit schwenkbar bezüglich wenigstens zwei zueinander senkrechten Achsen an dem ersten Arm angeordnet.

Bevorzugt ist wenigstens eine dieser (geometrischen) Schwenkachsen ortsfest. Bevorzugt ist diese ortsfeste Schwenkachse vertikal ausgerichtet. Bevorzugt ist wenigstens eine Achse stets, d.h. unabhängig von einer Position der Wechseleinrichtung und/oder der Greifeinrichtung, in einer raumfesten Ebene angeordnet. Diese raumfeste Ebene ist dabei bevorzugt eine horizontale Ebene. Bevorzugt sind wenigstens zwei (Schwenk)Achsen stets, d.h. unabhängig von einer Position der Wechseleinrichtung und/oder der Greifeinrichtung in einer raumfesten Ebene angeordnet.

Bevorzugt ist wenigstens ein Paar von (Schwenk)Achsen vorhanden, welche stets, d.h. unabhängig von einer Position der Wechseleinrichtung und/oder der Greifeinrichtung, senkrecht zueinander stehen. Bevorzugt ist bezüglich dieser beiden Schwenkachsen der erste Arm gegenüber einem (insbesondere stationären) Träger bewegbar.

Bevorzugt ist wenigstens ein weiteres Paar von (Schwenk)Achsen vorhanden, welche stets, d.h. unabhängig von einer Position der Wechseleinrichtung und/oder der Greifeinrichtung, senkrecht zueinander stehen. Bevorzugt ist bezüglich dieser beiden Schwenkachsen der zweite Arm gegenüber dem ersten Arm bewegbar.

Bevorzugt ist wenigstens ein weiteres Paar von (Schwenk)Achsen vorhanden, welche stets, d.h. unabhängig von einer Position der Wechseleinrichtung und/oder der Greifeinrichtung, senkrecht zueinander stehen. Bevorzugt ist bezüglich dieser beiden Schwenkachsen die Greifeinrichtung gegenüber dem zweiten Arm bewegbar.

Die hier beschriebene Anordnung der (geometrischen) Schwenkachsen eignet sich in besonderer Weise um eine hohe Bewegungsfreiheit der Greifeinrichtung zu ermöglichen. Bevorzugt sind wenigstens zwei Schwenkachsen stets, d.h. unabhängig von einer Position der Wechseleinrichtung und/oder der Greifeinrichtung, parallel zueinander

Vorteilhaft weist die Greifeinrichtung zwei Eingriffsmittel auf, um zwei an der Blasformeinrichtung angeordnete Vorsprünge zu greifen. Dabei kann an zwei Blasformteilen jeweils ein solcher Vorsprung angeordnet sein und die Greifeinrichtung kann diesen während des Transports hintergreifen, um so die Blasformeinrichtung in ihrer Gesamtheit zusammenhalten zu können.

Bei einer weiteren vorteilhaften Ausführungsform ist der zweite Arm bezüglich des ersten Arms um wenigstens zwei Schwenkachsen schwenkbar. Vorteilhaft handelt es sich hierbei um zueinander senkrechte Schwenkachsen.

Bei einer weiteren vorteilhaften Ausführungsform ist die Greifeinrichtung form- und/oder kraftschlüssig mit der Blasformeinrichtung verbindbar. Auf diese Weise kann ein sicheres Greifen und Transportieren der Blasformeinrichtungen mittels der Wechseleinrichtung ermöglicht werden, wobei auch ein Transportieren mit höheren Geschwindigkeiten möglich ist.

Bei einer weiteren vorteilhaften Ausführungsform weist die Greifeinrichtung ein passives Greifelement auf. Hierunter wird insbesondere verstanden, dass ein Halten der Blasformeinrichtung nicht durch eine aktive Greifbewegung des Greifelements erfolgt, etwa durch eine Klammerbewegung, sondern lediglich durch eine korrekte Positionierung des Greifelements bzw. der Greifeinrichtung gegenüber den zu transportierenden Blasformeinrichtungen. So kann insbesondere ein Element der Greifeinrichtung einen Abschnitt der Blasformeinrichtung hintergreifen.

Daneben ist es auch möglich, dass die Greifeinrichtung ein magnetisches bzw. magnetisierbares Element aufweist, um die Blasformeinrichtung zu halten. So könnte die Greifeinrichtung etwa einen Elektromagneten aufweisen, der aktivierbar ist, sobald sich die Greifeinrichtung in einer vorgegebenen Position gegenüber der Blasformeinrichtung befindet. Auch könnte durch die Greifeinrichtung ein magnetischer Halt zwischen Teilen der Blasformeinrichtung ausgelöst werden.

Bei einer weiteren vorteilhaften Ausführungsform weist die Wechseleinrichtung eine Steuerungseinrichtung auf, welche eine Entfernung der Blasformeinrichtung von den Blasformträgern und/oder eine Anordnung der Blasformeinrichtung an den Blasformträgern sowohl kraftals auch weggesteuert durchführt. Dabei können Erfassungseinrichtungen vorgesehen sein, welche eine Bewegung, insbesondere der Greifeinrichtung, erfassen und es können auch Erfassungseinrichtungen zum Messen von Kräften vorgesehen sein.

Durch diese Steuerung ist es auch möglich, einen oder mehrere Referenzpunkte an der Blasstation und/oder dem Magazin zu definieren, die angefahren werden können. Auf diese Weise kann auch die exakte geometrische Lage der Blasformeinrichtung zu jedem Zeitpunkt des Transports bestimmt werden. Weiterhin ist es bevorzugt, dass die Greifeinrichtung in mehreren Freiheitsgraden, zum Beispiel in eine X-, Y- und Z-Richtung auslenkbar ist, insbesondere, um Ungenauigkeiten einer Positionierung zu egalisieren. Dabei wäre es jedoch auch möglich, dass einer oder mehrere dieser Freiheitsgrade elektromechanisch blockiert werden können. Auf diese Weise kann ein schnellerer Arbeitsbetrieb der Vorrichtung erreicht werden.

Vorteilhaft ist eine Erfassungseinrichtung vorgesehen, welche die Position bzw. eine Auslenkung bezüglich dieser Freiheitsgrade erfassen kann, bevorzugt, indem sie diese beispielsweise elektrisch abfragt.

Bei einer weiteren vorteilhaften Ausführungsform weist die Greifeinrichtung aktive Elemente auf, welche einen Form- und Kraftschluss mit der Blasformeinrichtung herstellen. Dabei ist es möglich, dass die Greifeinrichtung eine formschlüssige Verbindung zwischen den beiden Seitenteilen der Blasformeinrichtung herstellt und weiterhin bevorzugt eine kraftschlüssige Verbindung zwischen den besagten Blasformhälften und der Bodenform hergestellt wird. Diese zweite Verbindung mit der Bodenform kann dabei über entsprechende Eingriffselemente der Seitenteile und/oder der Bodenform erreicht werden.

Bei einer weiteren vorteilhaften Ausführungsform weist die Vorrichtung, insbesondere die Greifeinrichtung Zentrierelemente auf, um eine exakte Positionierung der Greifeinrichtung an der Blasformeinrichtung bzw. an der Umformungsstation zu ermöglichen. Diese Zentrierelemente können dabei Einführschrägen, beispielsweise konische Einführschrägen, aufweisen, mit denen die Greifeinrichtung beim Wechselvorgang in korrespondierende Elemente an der Umformungsstation eingreift oder diese korrespondierenden Elemente kontaktiert. Vorteilhaft sind diese korrespondierenden Elemente an einem Formträgerhalter angeordnet. Auf diese Weise kann die Greifeinrichtung gegenüber der zu transportierenden Blasformeinrichtung positioniert werden.

Bei der hier vorgeschlagenen Ausführungsform soll einerseits die Möglichkeit geschaffen werden, eine vollständige Blasformeinrichtung auszuwechseln, welche insbesondere zwei Seitenteile und ein Bodenteil aufweist und insbesondere sich aus diesen Teilen zusammensetzt. In diesem Falle ist es möglich, dass der Wechselroboter die gesamte Blasformeinrichtung greift und durch eine ebenfalls gesamte und insbesondere auch zusammengesetzte Blasformeinrichtung austauscht. In manchen Fällen ist es jedoch von Kunden gewünscht, dass unterschiedliche Seitenteile mit einem identischen Bodenteil verwendet werden sollen. In diesen Fällen kann es hilfreich sein, dass nur die Seitenteile bzw. Bestandteile der Blasformeinrichtung gewechselt werden, nicht aber das Bodenteil, sondern dieses beibehalten wird. Wird jeweils - wie normalerweise üblich - die gesamte Blasformeinrichtung gewechselt, so müssten die Kunden auch jeweils (unnötige bzw. redundante) Bodenteile mitkaufen, was teilweise nicht akzeptiert wird.

Bei der hier vorgeschlagenen Ausführungsform wird daher vorgeschlagen, dass beispielsweise nur die Seitenteile von dem Wechselroboter eingewechselt werden. Damit ist bevorzugt die Vorrichtung hier derart gestaltet, dass ein wahlweises Wechseln der vollständigen Blasformeinrichtung (einschließlich deren Bodenteil) oder nur der beiden Seitenteile möglich ist. Umgekehrt wäre es auch möglich, lediglich das Bodenteil auszuwechseln und etwa ein oder zwei Seitenteile beizubehalten.

Es wird darauf hingewiesen, dass diese Ausführungsform auch ohne die oben beschriebene Erfindung anwendbar ist, also insbesondere ohne die oben beschriebenen Merkmale, wonach die Greifeinrichtung in wenigstens zwei unterschiedliche Richtungen beweglich und um wenigstens drei unterschiedliche Schwenkachsen schwenkbar ist. Die Anmelderin behält sich daher vor, Schutz zu beanspruchen für eine Vorrichtung nach dem Oberbegriff von Anspruch 1 und dem hier erwähnten zusätzlichen Merkmal, wonach die Wechseleinrichtung dazu geeignet und/oder bestimmt ist, wahlweise eine vollständige Blasformeinrichtung oder nur Einzelteile dieser Blasformeinrichtung zu wechseln.

Dabei soll besonders bevorzugt die Wechseleinrichtung dazu bestimmt sein, dass sie zunächst die Blasformeinrichtung in ihrer Gesamtheit von der Vorrichtung entnimmt und/oder anschließend eine Trennung von Einzelteilen der Blasformeinrichtung ermöglicht. So wäre es beispielsweise möglich, dass die beiden Seitenteile mit einem daran angeordneten Bodenteil entnommen werden und anschließend das Bodenteil von den Seitenteilen getrennt wird.

Es wäre jedoch auch denkbar, dass die Wechseleinrichtung derart gestaltet ist, dass sie lediglich Einzelteile der Blasformeinrichtung von der jeweiligen Blasformstation bzw. Umformungsstation entnimmt. So wäre es möglich, dass lediglich ein oder zwei Seitenteile der Blasformeinrichtungen von der jeweiligen Blasstation entnommen werden. So könnten beispielsweise die Seitenteile als Paket entnommen werden und ein Bodenteil bei dem Wechselvorgang in der Blasformstation verbleiben.

Bei einer weiteren vorteilhaften Ausführungsform ist es möglich, dass im Rahmen eines Wechselvorgangs die Befestigungsmechanismen der Blasformeinrichtungen von denen eines Bodenteils getrennt und/oder aktiviert bzw. deaktiviert werden können. So wäre es beispielsweise möglich, dass eine Befestigung zwischen einem oder beiden Seitenteilen und dem Bodenteil aktivierbar und deaktivierbar ist, um so beispielsweise die Seitenteile einzeln entnehmen zu können.

Bei einer weiteren vorteilhaften Ausführungsform ist es möglich, dass ein Halten des Bodenteils in den Seitenteilen während eines Wechselvorgangs über Vorsprünge und insbesondere über Prismen, besonders bevorzugt über komplementäre Prismen erfolgt. Diese komplementären Vorsprünge bzw. Prismen können dabei bevorzugt auch während des Blasvorgangs die auf das Bodenteil wirkende Blaskraft aufnehmen.

Bei einer weiteren vorteilhaften Ausführungsform ermöglicht die Greifeinrichtung selbst ein Herstellen und/oder Lösen einer zwischen Bestandteilen der Blasformeinrichtung bestehenden mechanischen Verbindung. Insbesondere erlaubt die Greifeinrichtung selbst eine Herstellung und/oder eine Lösung einer zwischen Seitenteilen der Blasform und einem Bodenteil der Blasform bestehenden, insbesondere mechanischen, Verbindung. So kann die Wechseleinrichtung und/oder die Greifeinrichtung ein erstes Halteelement zum Halten eines ersten Seitenteils der Blasformeinrichtung aufweisen sowie ein zweites Halteelement zum Halten eines zweiten Teils der Blasformeinrichtung und diese beiden Halteelemente können insbesondere zum Lösen einer Verbindung zwischen den Seitenteilen und dem Bodenteil bezüglich einander beweglich sein. Vorteilhaft sind diese beiden Halteelemente bezüglich einander relativ zu einer geraden Linie beweglich.

Bevorzugt kann die Greifeinrichtung wenigstens einen Antrieb aufweisen, der eine Bewegung wenigstens eines dieser Halteelemente bewirkt. Bei diesem Antrieb kann es sich dabei um einen elektrischen, hydraulischen oder pneumatischen Antrieb handeln.

Bei einer vorteilhaften Ausführungsform kann das Greifelement die beiden Seitenteile der Blasformeinrichtung im Wesentlichen senkrecht zu einer Längsachse der Blasformeinrichtung bewegen. Durch diese Bewegung kann eine Trennung der Verbindung zwischen den Seitenteilen und dem Bodenteil erfolgen.

Bei einer weiteren vorteilhaften Ausführungsform ist die Greifeinrichtung derart gestaltet, dass sie die beiden Seitenteile der Blasformen relativ zueinander auseinander- und/oder zusammenbewegen kann.

Beim Wechseln von lediglich einigen Elementen der Blasformeinrichtungen ist es möglich, dass ein Bodenteil der Blasformeinrichtung auf einer Position abgelegt wird und anschließend beim Einlegen von neuen Seitenteilen mit dieser wieder verbunden bzw. eingelegt wird.

Bevorzugt weist diese Wechseleinrichtung wenigstens einen schwenkbaren Wechselarm auf und ist wenigstens mittelbar an dem Basisträger angeordnet. Es wird daher vorgeschlagen, eine Wechseleinrichtung, insbesondere in Form eines Wechselroboters direkt im Bereich der Vorrichtung zum Umformen anzuordnen. Vorteilhaft weist daher diese Vorrichtung einen Basisträger, wie etwa ein Maschinengestell, auf, an dem auch der Stationsträger angeordnet ist. An diesem Basisträger ist wiederum auch der Wechselroboter angeordnet, sodass er insgesamt in die Maschine integriert werden kann.

Unter einer wesentlich mittelbaren Anordnung wird dabei verstanden, dass die Wechseleinrichtung direkt an dem Basisträger angeordnet sein kann, es aber auch denkbar ist, dass die Wechseleinrichtung an einem weiteren Element angeordnet ist, etwa einem Zwischenträger, der wiederum wiederrum an dem Basisträger angeordnet ist. Grundsätzlich wäre es aber auch denkbar, die Wechseleinrichtung außerhalb des Trägers anzuordnen. So wäre es denkbar, die Wechseleinrichtung außerhalb der Blasmaschine zu positionieren.

Es wird damit eine Integration der Wechseleinrichtung bzw. des Roboters in die Maschine vorgeschlagen. Vorteilhaft ist die Blasformeinrichtung mehrteilig ausgebildet und weist zumindest zwei Seitenteile und ein Bodenteil auf. Im Betrieb bilden diese drei Teile den besagten Hohlraum zum Expandieren der Kunststoffvorformlinge aus. Vorteilhaft sind wenigstens zwei Teile und besonders bevorzugen alle drei Teile dieser Blasformeinrichtung miteinander verriegelbar, sodass die Blasform in ihrer Gesamtheit aus der Maschine bzw. von dem Blasformträger entfernt werden kann. Der Blasformträger ist damit zur Aufnahme unterschiedlicher Blasformeinrichtungen geeignet. Dabei wäre es möglich, dass die Blasformeinrichtung selbst noch mittels Trägerschalen an dem Blasformträger angeordnet ist.

Vorteilhaft sind die Blasformträger bezüglich einander bewegbar und insbesondere schwenkbar. Dabei können in einem Arbeitsbetrieb die Blasformträger um einen vorgegebenen Schwenkwinkel auseinandergeschwenkt werden, um Kunststoffvorformlinge einzubringen und/oder um gefertigte Behältnisse zu entnehmen. Dabei sind bevorzugt für den Wechselbetrieb größere Öffnungswinkel möglich.

Bei einer weiteren vorteilhaften Ausführungsform weisen die Umformungsstationen jeweils Reckstangen auf, die im Betrieb in die Kunststoffvorformlinge einführbar sind, um diese in deren Längsrichtung zu dehnen. Vorteilhaft weisen die einzelnen Umformungseinrichtungen auch Beaufschlagungseinrichtungen auf, welche insbesondere Blasdüsen aufweisen, welche im Betrieb die Kunststoffvorformlinge mit einem fließfähigen und insbesondere einem gasförmigen Medium beaufschlagen. Es wäre dabei möglich, dass auch andere Teile der Umformungsstationen ausgewechselt werden, wie insbesondere die besagte Beaufschlagungseinrichtung bzw. Blasdüsen und/oder die Reckstangen.

Vorteilhaft handelt es sich bei dem Stationsträger um einen drehbaren Träger, wie insbesondere um ein Blasrad. Die einzelnen Umformungsstationen sind bevorzugt an einem Außenumfang dieses drehbaren Trägers angeordnet. Damit werden die Umformungsstationen im Arbeitsbetrieb entlang eines kreisförmigen Pfades bewegt.

Vorteilhaft weist die Vorrichtung eine Antriebseinrichtung zum Bewegen des Stationsträgers auf und diese Antriebseinrichtung ermöglicht dabei bevorzugt sowohl eine kontinuierliche Bewegung des Stationsträgers als auch eine getaktete Bewegung des Stationsträgers, welche damit zwischen Bewegungen jeweils Ruhephasen aufweist. Vorteilhaft ist dabei diese Bewegungsart in Abhängigkeit von einem Betriebsmodus einstellbar. In einem Arbeitsbetrieb wird der Stationsträger bevorzugt kontinuierlich bewegt und in einem Wechselbetrieb bevorzugt getaktet. Dabei kann eine Bewegung dieses Stationsträgers auch auf Bewegungen der Wechseleinrichtungen abgestimmt sein. Vorteilhaft handelt es sich beim dem Stationsträger um ein Blasrad.

Durch die erfindungsgemäße Vorgehensweise wird ein vollautomatischer Wechselvorgang, insbesondere mittels eines Industrieroboters, ermöglicht. Vorteilhaft kann dabei die Blasformeinrichtung, insbesondere in einem Wechselbetrieb, vollautomatisch verriegelt werden, bzw. die einzelnen Elemente der Blasformeinrichtungen aneinander befestigt werden. Die Wechseleinrichtung ist damit bevorzugt geeignet, die vollständige Blasformeinrichtung, das heißt deren mindestens drei Bestandteile im Verbund zu greifen bzw. zu entnehmen. Vorteilhaft kann nach dem Greifen der Blasformeinrichtung eine entsprechende Formverriegelung deaktiviert werden. In einem weiteren Schritt kann die Wechseleinrichtung den Formverbund in einer Lagervorrichtung, wie einem Magazin, absetzen. In der Folge kann die Wechseleinrichtung einen neuen Formverbund bzw. eine neue Blasformeinrichtung in einen Blasformträger einsetzen und (bevorzugt) die neue Blasformeinrichtung mit dem Blasformträger verriegeln.

Anschließend kann der Stationsträger um eine Position weitergefahren werden, um eine weitere Blasformeinrichtung auszuwechseln. Damit kann insbesondere ein vollautomatischer Vorgang durchgeführt werden, bei dem kein Benutzer notwendig ist.

Bei einer weiteren vorteilhaften Ausführungsform weist die Vorrichtung ein Gehäuse auf, welche zumindest den Stationsträger in dessen Umfangsrichtung umgibt. Dabei kann im Prinzip die vollständige Blasformeinrichtung und/oder die Wechseleinrichtung innerhalb eines Gehäuses angeordnet sein, wobei dieses Gehäuse auch eine Schutzfunktion aufweisen kann.

Die Wechseleinrichtung wird bevorzugt direkt in die Maschine integriert und kann beispielsweise an einem Grundgestell angebaut sein. Bei einer weiteren vorteilhaften Ausführungsform ist die Wechseleinrichtung in ihrer Gesamtheit in einem von dem Gehäuse umgebenden Raum verlagerbar. In diesem Falle ist es möglich, dass in einem Betriebszustand die Wechseleinrichtung vollständig in die Maschine integriert ist und so beispielsweise von außen noch nicht einmal sichtbar ist und insbesondere den Betrieb der Umformungseinrichtung nicht stört. Dabei ist es möglich, dass eine Verkleidung des Gehäuses auch als Schutzeinrichtung für die Wechseleinrichtung bzw. den Roboter dient. Im Arbeitsbetrieb ist damit bevorzugt die besagte Wechseleinrichtung innerhalb des Gehäuses angeordnet.

Bei einer weiteren vorteilhaften Ausführungsform weist die Wechseleinrichtung eine erste Steuerungseinrichtung zum Steuern einer Entfernungsbewegung der Blasformeinrichtungen und/oder einer Zuführ- bzw. Anordnungsbewegung zum Anordnen der Blasformeinrichtungen an den Blasformträgern auf und die Vorrichtung weist bevorzugt auch eine zweite Steuerungseinrichtung zum Steuern eines Blasformvorgangs auf, wobei die erste Steuerungseinrichtung und die zweite Steuerungseinrichtung wenigstens teilweise und/oder wenigstens zeitweise zusammenwirken. Insbesondere wirken diese beiden Steuerungseinrichtungen während eines Blasformwechselvorgangs zusammen. So können während eines Wechselvorgangs die gleichen Bewegungen, die auch im Arbeitsbetrieb nötig sind, auch für den Wechselvorgang verwendet werden, wie beispielsweise die Transportbewegung der Umformungsstationen, das Öffnen und Schließen der Blasformträger und dergleichen.

Im Wechselvorgang können die Blasformträger ebenfalls geöffnet werden, um die Blasformeinrichtung entnehmen zu können. So kann beispielsweise die zweite Steuerungseinrichtung eine Öffnung der Blasformträger bewirken und in Abhängigkeit hiervon kann die erste Steuerungseinrichtung ein Herausnehmen der Blasformeinrichtungen bewirken. Auch hierdurch wird ein vollautomatischer Wechsel der Blasformen möglich. Damit interagiert bevorzugt die Steuerung der Wechseleinrichtung mit der Steuerungseinrichtung der Umformungsmaschine bzw. Blasmaschine.

Bei einer weiteren bevorzugten Ausführungsform weist die Wechseleinrichtung eine erste Steuerungseinrichtung zum Steuern einer Entfernungsbewegung der Blasformeinrichtungen und/oder der Anordnungsbewegung zum Anordnen der Blasformeinrichtung an den Blasformträgern auf und die Vorrichtung weist auch eine zweite Steuerungseinrichtung zum Steuern eines Blasvorgangs auf, wobei eine Steuerungseinrichtung in die andere Steuerungseinrichtung integriert ist.

Insbesondere ist dabei die Steuerung der Wechseleinrichtung in eine Steuerung der Vorrichtung bzw. Blasmaschine integriert. So wäre es möglich, dass die Wechseleinrichtung als Modul ausgeführt ist, welches auch steuerungstechnisch, beispielsweise nach einem Zusammenstecken oder steuerungstechnischen Verbinden, in die Blasformmaschine integriert werden kann. Auch wäre es so möglich, dass eine Wechseleinrichtung an bereits bestehende Vorrichtungen nachgerüstet wird. Diese Steuerungseinrichtungen können dabei derart gestaltet sein, dass ein Schutzbereich während eines Wechselbetriebs erweitert wird. In einem Arbeitsbetrieb kann sich die Wechseleinrichtung in einer Ruheposition befinden, in der von ihr keine Gefahren ausgehen, und in der sie auch eine Bedienung der Maschine nicht verhindert.

Im Wechselbetrieb wird auch die Wechseleinrichtung aktiv, sodass diejenigen Bereiche, deren Betreten für den Benutzer unter Umständen gefährlich sein könnte, erweitert werden müssen. So ist es denkbar, dass im Rahmen des Wechselbetriebes geänderte Schutzbereiche auch für den Benutzer gesperrt oder zumindest erkennbar gemacht werden.

Dabei wäre es möglich, dass im Rahmen des Wechselbetriebes zusätzliche Schutzelemente betätigt werden, wodurch die Sicherheit des Bedieners erhöht werden kann.

Bei einer weiteren vorteilhaften Ausführungsform weist die Wechseleinrichtung wenigstens eine Greifeinrichtung zum Greifen der Blasformeinrichtungen auf. Dabei kann es sich um eine Greifeinrichtung handeln, welche die Blasformeinrichtung in ihrer Gesamtheit greift. Dabei wäre es möglich, dass an der Greifeinrichtung benötigte Medien und/oder elektrische Signale durch Bereiche der Wechseleinrichtungen, wie beispielsweise Achsen oder Schwenkarme, geführt werden. Auch wäre es möglich, dass derartige Verbindungen über Drehdurchführungen, beispielsweise an den Achsen der Wechseleinrichtungen geführt werden.

Bei einer weiteren vorteilhaften Ausführungsform weist die Wechseleinrichtung wenigstens eine Erfassungseinrichtung zum Erfassen wenigstens einer auf ein Element der Wechseleinrichtung wirkenden Kraft auf. So können insbesondere äußere Kräfte, die beispielsweise auf einen Wechselarm, der die Blasformeinrichtungen entnimmt, wirken. So kann insbesondere die oben erwähnte Steuerungseinrichtung derart ausgeführt sein, dass sie auf äußere Kräfte reagieren kann, beispielsweise während definierter Operationen wie einem Ablegen oder Aufnehmen einer Blasformeinrichtung, die Wechseleinrichtung von einer Soll-Position abweichen kann (Softfloat). Allgemein handelt es sich um eine Erfassungseinrichtung, welche auf physikalische Einwirkungen reagieren kann bzw. derartige Einwirkungen erfassen kann, wie etwa ein Drehmoment, Kräfte, Impulse oder dergleichen. Auf diese Weise ist eine schnelle Reaktion der Wechseleinrichtung möglich.

Bevorzugt bewegt sich jedoch die Wechseleinrichtung innerhalb eines begrenzten Arbeitsbereiches. Dies bedeutet, dass insbesondere auch die Entnahme- und Zuführbewegung für die Blasformeinrichtungen in einem begrenzten Arbeitsbereich stattfindet. In Reaktion auf die oben erwähnten äußeren Kräfte kann eine Position von diesem Arbeitsbereich abweichen. Ansonsten wird jedoch bevorzugt dieser definierte Arbeitsbereich eingehalten, insbesondere während eines Formenwechsels.

Dabei ist es vorteilhaft möglich, dass der Arbeitsbereich der Wechseleinrichtung sicherheitstechnisch und insbesondere mechanisch begrenzt wird. Eine derartige Begrenzung wäre durch unterschiedliche Maßnahmen möglich, etwa durch Lichtschranken, welche eine falsche bzw. zu weit gehende Bewegung der Wechseleinrichtung erfassen und in der Folge entweder eine Rückführung oder einen Notstopp der Wechseleinrichtung bewirken. Daneben wäre jedoch auch eine Begrenzung des Arbeitsbereiches durch mechanische Elemente, wie beispielsweise Anschläge, möglich.

Daneben ist es auch bevorzugt möglich, dass ein Arbeitsbereich der Wechseleinrichtung sicherheitstechnisch und elektrisch bzw. auch steuerungsseitig überprüft wird. Dabei ist es insbesondere möglich, dass dieser Arbeitsbereich abweichend von einem maximalen möglichen Arbeitsbereich (weiter) eingeschränkt wird.

Bei einer weiteren vorteilhaften Ausführungsform weist die Wechseleinrichtung eine serielle und/oder parallele Kinematik mit wenigstens drei Bewegungsachsen auf. Vorteilhaft weist die Wechseleinrichtung eine serielle und/oder parallele Kinematik mit mehr als drei Bewegungsachsen auf. Auf diese Weise wird eine sehr hohe Bewegungsfreiheit der Wechseleinrichtung bzw. eines Greifelements der Wechseleinrichtung ermöglicht. Die Blasformeinrichtungen können daher in Abhängigkeit von den tatsächlichen Gegebenheiten in unterschiedlicher Weise auch von ihren Blasformträgern entnommen bzw. diesen zugeführt werden.

Dabei ist es möglich, dass die Vorrichtung eine Bedieneinrichtung aufweist, um die Wechseleinrichtung bzw. den Greifarm zu steuern. Dabei kann es sich beispielsweise um ein Handbediengerät handeln. Es wäre jedoch auch möglich, dass eine Steuerung der Wechseleinrichtung über Geräte wie beispielsweise Smartphones steuerbar ist.

Eine Steuerung durch ein derartiges Bediengerät ist dabei insbesondere im Einrichtbetrieb, das heißt beim Zuführen von neuen Blasformeinrichtungen vorteilhaft.

Erfindungsgemäß wird zum Wechseln der Blasformeinrichtungen eine an der Vorrichtung angeordnete Wechseleinrichtung verwendet. Es wird daher auch verfahrensseitig vorgeschlagen, dass derartige Blasformwechsel mittels einem an der Vorrichtung angeordneten bzw. in diese integrierten Wechselroboters durchgeführt werden.

Bei einem weiteren bevorzugten Verfahren werden die Umformungsstationen in dem Arbeitsbetrieb entlang eines umlaufenden Transportpfades transportiert und in dem Wechselbetrieb werden die Blasformeinrichtungen in einer vorgegebenen festgelegten Position der jeweiligen Umformungsstation, deren Blasformeinrichtung entnommen werden soll, bezüglich des umlaufenden Transportpfades entnommen. Es wird daher vorgeschlagen, dass im Arbeitsbetrieb die Umformungsstationen umlaufen, wie dies an sich im Stand der Technik bekannt ist. Für den einzelnen Wechselvorgang wird jedoch vorgeschlagen, dass dieser an wenigstens einer genau bestimmten Station erfolgt, die insbesondere auch in einem Wirkungsbereich der Wechseleinrichtung liegt. Mit anderen Worten ist vorteilhaft die Entnahmeposition an einem Blasrad immer identisch. Dabei ist es möglich, dass sich die Wechseleinrichtung während der Produktion oder des Arbeitsbetriebes derart ausrichtet, dass sie innerhalb eines Blasmaschinenschutzbereiches bzw. Gehäuses angeordnet werden kann.

Hinsichtlich der Steuerungseinrichtung ist es denkbar, dass diese über zwei unabhängige Koordinatensysteme den Bewegungsablauf der Wechseleinrichtung bzw. des Roboters steuert. Bevorzugt ist dabei ein Koordinatensystem an der Entnahme- bzw. Eingabeposition der Blasformeinrichtung zu der Umformungsstation bzw. den Blasformträgern platziert. Ein weiteres Koordinatensystem kann im Bereich einer Aufnahmeeinrichtung bzw. eines Magazins befindlich sein, in welchem die Blasformeinrichtungen abgelegt werden.

Es ist aber möglich, dass die Positionen der Aufnahmestellen der Blasformeinrichtungen an der Aufnahmeeinrichtung bzw. dem Magazin relativ zu dessen Koordinatensystem unabhängig von der Aufnahmeeinrichtung unverändert bleiben und/oder die Positionen der Aufnahmestellen sich in äquidistanten Abständen zu diesem Koordinatensystem befinden. Dabei ist es möglich, dass eine Anzeigeeinrichtung, wie insbesondere ein Eingabebildschirm der Wechseleinrichtung vorgesehen ist. Über diesen können bestimmte Werte der Koordinatensysteme, insbesondere die X-, Y- und Z-Werte der Koordinatensysteme verändert werden. Daneben kann bevorzugt an der Wechseleinrichtung eine weitere Eingabeeinrichtung wie ein Eingabebildschirm angeordnet sein, der bevorzugt mit einer Eingabeeinrichtung der Blasformmaschine interagiert.

Zum Entnehmen und Zuführen der Blasformeinrichtungen sind mehrere Möglichkeiten denkbar.

So wäre es denkbar, dass zunächst alle Blasformeinrichtungen aus den einzelnen Formträgern, das heißt den einzelnen Umformungsstationen entnommen werden und in ein leeres Magazin bzw. Lagersystem eingegeben werden. Anschließend wird dieses Lagersystem mit den Altformen durch ein volles Lagersystem mit neuen einzuwechselnden Blasformeinrichtungen ersetzt. Anschließend werden alle Neuformen in die Blasformträger eingegeben. Der Wechsel der Lagersysteme kann dabei beispielsweise mittels Hubwagen oder mittels Drehtischen erfolgen, etwa in der Art eines Palettenwechsels bei Werkzeugmaschinen. In diesem Falle wird der Blasformträger für einen vollständigen Wechsel vorteilhaft zwei vollständige Umdrehungen durchführen.

Bei einem weiteren möglichen Wechselvorgang enthält ein Magazin eine Leerstelle. Dabei wird zunächst eine Neuform aus einem Formplatz in diese Leerstelle gestellt. Anschließend wird eine Altform aus dem Formträger in den besagten Formplatz gestellt. In einem weiteren Schritt wird eine Neuform aus dem Magazin in den Formträger übergeben. Anschließend wird eine zweite Neuform in die Leerstelle gesetzt und so weiter, bis der gesamte Wechsel vollzogen ist. Durch das Zwischenlagern in einer Leerstelle wird gewährleistet, dass eine bestimmte Blasformeinrichtung wieder an einem bestimmten Lagerplatz bzw. einem bestimmten Blasformträger übergeben wird. Vorteilhaft befindet sich dabei die besagte Leerstelle räumlich zwischen dem Blasformträger und dem Lagersystem und bevorzugt auf bzw. in dem Lagersystem selbst.

Vorteilhaft erfolgt die Entnahme der Blasformeinrichtung und/oder die Zuführung neuer Blasformeinrichtungen in einem Taktbetrieb. Dies bedeutet, dass der einzelne Wechsel der Blasformeinrichtung erfolgt, während die Umformungsstation stillsteht. Dabei kann die Wechseleinrichtung eine bestimmte Blasformeinrichtung in einem Magazin ablegen, und währenddessen kann die Umformungseinrichtung selbst um eine Station weiter fahren, das heißt das Blasrad dreht sich um eine Position weiter. Zum Einsetzen und Entnehmen der Blasformeinrichtungen wird vorteilhaft eine relativ zu dem Transportpfad radiale Richtung verwendet. Wie oben erwähnt, ist es auch möglich, die Blasformeinrichtung in einer Zwischenstation zu parken bzw. abzustellen. Hierfür kann bevorzugt eine vertikale Bewegung verwendet werden.

Verfahrensseitig ist es möglich, dass die Greifeinrichtung der Wechseleinrichtung die Blasformeinrichtung formschlüssig greift, um diese zu transportieren bzw. aus der Vorrichtung zu entnehmen. Vorteilhaft greift die Greifeinrichtung der Wechseleinrichtung kraftschlüssig in die Blasformeinrichtung ein.

Bei einer weiteren vorteilhaften Ausführungsform erfolgt die Entnahme und/oder das Ablegen der Blasformeinrichtung weg- und/oder kraftgesteuert und bevorzugt sowohl weg- als auch kraftgesteuert.

Im Rahmen der Steuerung ist es möglich, dass die Wechseleinrichtung wenigstens einen definierten Referenzpunkt an der Umformungsstation bzw. der Aufnahme- oder den Blasformträgern anfährt und/oder bevorzugt auch wenigstens einen definierten Referenzpunkt an einem Ablageort, wie beispielsweise einem Magazin. Auf diese Weise können die besagten Punkte in die Steuerung der Wechseleinrichtung übertragen werden, wodurch die exakten Lagen der Formaufnahme bzw. des Blasformträgers und auch des Magazins bzw. der Aufbewahrungseinrichtung ermittelt werden können. Bevorzugt ist es dabei möglich, dass die besagten Referenzpunkte nach jedem Austausch einer Magazinvorrichtung angefahren werden oder auch im Falle von Störungen, wie beispielsweise Spannungsausfällen, angefahren werden, um so in die Steuerung übertragen zu werden.

Dabei ist es möglich, dass die so ermittelten Referenzpunkte abgespeichert werden und/oder mit Referenzpunkten, welche in der Steuerung bzw. einer Speicherungseinrichtung der Steuerung hinterlegt sind, abgeglichen werden. Falls zwischen dem ermittelten Referenzpunkt und dem bereits abgespeicherten Referenzpunkt eine Abweichung auftritt, die insbesondere über ein vorbestimmtes Maß hinaus geht, kann eine Fehlermeldung bzw. ein Hinweis erzeugt werden.

Bei einer weiteren vorteilhaften Ausführungsform weist die Wechseleinrichtung eine Bildaufnahmeeinrichtung, wie etwa eine Kamera oder dergleichen, auf. Mithilfe dieser Kameraeinrichtung ist es möglich, die genauen Aufnahme- bzw. Ablagepunkte für die Blasformeinrichtungen zu erfassen.

In diesem Zusammenhang ist es denkbar, dass die Blasformeinrichtungen und/oder der Blasformträger und/oder die Magazineinrichtung jeweils eine Kennzeichnung enthalten, um eine Zuordnung zwischen den Blasformeinrichtungen und der jeweiligen Blasstation zu gewährleisten. Auf diese Weise kann sichergestellt werden, dass eine bestimmte Blasformeinrichtung, die von einer bestimmten Umformungsstation entnommen wurde, bei einem weiteren Wechsel auch wieder der gleichen Umformungsstation zugeordnet wird. So wäre es möglich, dass jedem Aufnahmemagazin eine einzelne Kennung zugeordnet ist.

Diese Kennzeichnungen können dabei beispielsweise Stichcodes, QR-Codes, RFID-Tags und dergleichen sein. Vorteilhaft ist es möglich, dass diese Kennzeichnung berührungslos abgefragt wird. Vorteilhaft wird die Kennzeichnung bzw. ein für diese Kennzeichnung charakteristischer Wert in die Steuerungseinrichtung der Maschine übernommen.

Bei einem weiteren Verfahren ist es auch denkbar, dass die jeweiligen Kennzeichnungen nach jedem Wechsel der Magazineinrichtung oder auch bei Ausfällen der Maschine erneut eingelesen werden. Auf diese Weise kann eine sichere Zuordnung auch unter Ausnahmebedingungen gewährleistet werden.

Im Folgenden wird noch eine Aufnahmeeinrichtung bzw. ein Magazin für die Blasformeinrichtungen beschrieben. Diese Aufnahmeeinrichtung kann für einen Formwechsel an einer geeigneten Position angeordnet werden, etwa neben der Umformungseinrichtung. Dabei kann die Magazin- bzw. Aufnahmevorrichtung Einführbereiche aufweisen, über welche die Blasformeinrichtungen in das Magazin bzw. die Aufnahmeeinrichtungen abgelegt werden können. Diese Einführbereiche können dabei konisch ausgeführt sein, um ein sicheres Einführen der Blasformeinrichtungen zu ermöglichen. Vorteilhaft wird dabei die Blasformeinrichtung bzw. das Formenpaket im Wesentlichen vertikal in das Magazin eingeführt. Besonders bevorzugt kann die Blasformeinrichtung in zylindrischen Öffnungen des Magazins bzw. der Aufnahmeeinrichtung abgelegt werden. Das Magazin selbst kann - insbesondere formschlüssig - in dieser Aufnahmeeinrichtung angeordnet sein.

Bei einer bevorzugten Ausführungsform kann diese Magazinvorrichtung dabei elastische Elemente, insbesondere im Bereich der zylindrischen Öffnungen, zum Einführen der Blasformeinrichtungen aufweisen, um Toleranzen ausgleichen zu können.

Bei einer weiteren vorteilhaften Ausführungsform wäre es auch möglich, dass die Magazin- bzw. die Aufnahmeeinrichtung und/oder die Blasformeinrichtung in den Bereichen, in denen die Blasformeinrichtung mit den zylindrischen Öffnungen der Magazinvorrichtung in Kontakt tritt, mit Einführbereichen und insbesondere mit kegeligen Einführbereichen ausgestattet ist.

Bei einer weiteren vorteilhaften Ausführungsform weist, wie oben erwähnt, die Magazin- bzw. Aufnahmevorrichtung eine Vielzahl von Öffnungen zum Aufnehmen der einzelnen Blasformeinrichtungen auf. Dabei sind diese Öffnungen vorteilhaft zylindrisch ausgebildet. Besonders bevorzugt sind diese Öffnungen in den Magazinvorrichtungen zumindest bereichsweise aus Kunststoff ausgeführt.

Dabei ist es möglich, dass diese Öffnungen in mehreren Reihen angeordnet sind und beispielsweise zwei benachbarte Reihen gegenüber einander versetzt sind. Auf diese Weise kann die Packungsdichte der Blasformeinrichtungen erhöht werden.

Bei einer weiteren vorteilhaften Ausführungsform ist die Position der Blasformeinrichtung innerhalb der Aufnahmeeinrichtung niedriger als die Position der Blasformeinrichtung in dem Blasformträger. Auf diese Weise wird bei der Demontage der Blasformeinrichtung diese nach unten abgesenkt.

Bei einer weiteren vorteilhaften Ausführungsform weist das Magazin eine mehreckige und bevorzugt rechteckige Außenkontur auf, wobei bevorzugt die Längsseite dieser Außenkontur im Wesentlichen senkrecht zu einer gedachten radialen Verbindungslinie zwischen einem Teilkreismittelpunkt und den Blasformträgern angeordnet ist. Auf diese Weise kann die Magazineinrichtung von der Wechseleinrichtung bzw. einem Arm der Wechseleinrichtung sehr leicht erreicht werden.

Im Folgenden wird die Ausgestaltung der Blasformeinrichtung beschrieben. So ist es denkbar, dass zum Entriegeln der Blasformeinrichtungen an einem Formträger oder auch einer Formträgerschale bzw. auch beim Entriegeln eines Bodenteils der Blasformeinrichtung die Anordnung, das heißt insbesondere die Seitenteile und das Bodenteil, mechanisch miteinander verbunden werden. Es käme jedoch auch eine magnetische Verbindung in Betracht.

Vorteilhaft ist ein derartiger Fixiermechanismus, der die einzelnen Blasformteile miteinander verbindet, so ausgeführt, dass dieser nur eine Kraft in einer Zugrichtung aufweist bzw. ausführt und radial hierzu eine bestimmte Nachgiebigkeit aufweist, um Toleranzen auszugleichen. Vorteilhaft kann an den Teilen der Blasformeinrichtungen, wie etwa den Blasformhälften, ein Vorsprung, ein Nocken oder dergleichen vorgesehen sein, welcher von einem Element der Greifeinrichtung hintergriffen werden kann oder in welchen die Greifeinrichtung einfahren kann.

Bei einer weiteren vorteilhaften Ausführungsform sind die in Verbindung mit einer Greifeinrichtung stehenden Vorsprünge oder Nocken vorteilhaft radial innerhalb des durch einen Behältnismittelpunkt beschriebenen Teilkreises angeordnet. Auf diese Weise kann erreicht werden, dass diese Nocken auch im Arbeitsbetrieb nicht mit Klammern, beispielsweise eines Einlauf- und Auslaufstern in Kontakt treten können.

Bei einer weiteren vorteilhaften Ausführungsform wäre es auch möglich, dass zwischen den beiden Formschalen und einer Bodenform der Blasformeinrichtung eine formschlüssige Verbindung vorliegt, welche ein Verdrehen der Bodenform relativ zu den Seitenteilen bzw. Formschalen verhindert. Daneben wäre es auch möglich, dass die Bodenform vor dem Wechselvorgang mechanisch mit den Formhälften verbunden wird.

Zur Vereinfachung eines Belade- und Entladevorgangs wäre es möglich, dass eine Rotationsachse der Blasformeinrichtung während des Be- und Entladens (der Kunststoffbehältnisse) im Wesentlichen parallel zur Achse des Formträgers bzw. auch zu einer Drehachse des Blasrades verläuft.

In einer weiteren vorteilhaften Ausführungsform wäre es auch möglich, dass ein Schutzbereich der Blasmaschine während einer Produktion automatisch von einem Ablagebereich der Blasformen bzw. Blasformeinrichtungen getrennt wird. Eine derartige Trennung kann dabei automatisch bei einem Beginn bzw. Starten eines Formwechselvorgangs - insbesondere automatisch - durchgeführt werden.

Dabei können die Schutzbereiche so geändert werden, dass ein Maschinenbediener während der Produktion der Vorrichtung bzw. während des Arbeitsbetriebs einen Bereich der Formenablage betreten kann. So wäre es denkbar, dass beispielsweise eine elektromechanische Einheit die Position einer Umformungsstation relativ zu der Wechseleinrichtung jeweils nach der Positionierung des Blasrades bevorzugt form- und/oder kraftschlüssig sicherstellt.

Weiterhin wäre es auch denkbar, dass der Roboter die Blasformeinrichtung bzw. das Formenpaket aus einer Zwischenposition in das Magazin ablegt, während das Blasrad einen Takt weiter fährt bzw. eine nachfolgende Umformungsstation in eine Wechselposition bringt. Daneben könnte allgemein der Ablauf eines Blasformeinrichtungswechsels das Anfahren einer Zwischenstation beinhalten, an der die Blasformeinrichtung temporär geparkt bzw. abgelegt wird. In diesem Falle braucht die Halteeinrichtung nicht als Doppelgreifer ausgeführt sein und es ist dennoch eine stationsgerechte Zuordnung der Formen in einer Aufbewahrungseinrichtung wie einem Magazin möglich.

Wie oben bereits erwähnt, kann es vorteilhaft sein, wenn die Öffnungsbewegungen des Blasformträgers und des Bodens in einer Wechselposition für die Blasformeinrichtung von der im Betrieb abweicht. Dies kann beispielsweise bei einer nicht gekoppelten Formträgeransteuerung vorteilhaft sein. Auch wäre es möglich, dass ein relativ zu der in der Blasformeinrichtungswechselposition jeweils vor- bzw. nacheilenden Blasformträger der Nachbarstation ebenfalls bereichsweise weggeschwenkt wird, um für die in der Wechselposition befindliche Umformungsstation einen größeren Öffnungswinkel zu ermöglichen.

Weiterhin wäre es möglich, dass ein Fixiermechanismus für die Formschalen und die Bodenformen während eines Spannablaufs eine progressive Kennlinie aufweist. Zu Beginn eines derartigen Spannablaufs kann ein großer Hub mit einer geringen Kraft erfolgen, um möglichst große Abstände beim Einziehen überbrücken zu können. Gegen Ende des Spannablaufs wird bevorzugt eine große Kraft bei nur geringem Hub durchgeführt.

Bei einem weiteren vorteilhaften Verfahren befindet sich die Wechselposition der Blasstation und/oder das Magazin und/oder eine etwaige Zwischenposition in der die Blasformeinrichtungen zwischenzeitlich positioniert werde, in einem vorgegebenen Umfangsbereich eines Wirkkreises der Wechseleinrichtung, vorzugsweise in einem Bereich von 270° des Wirkkreises, bevorzugt in einem Bereich von 220° des Wirkkreises und besonders bevorzugt in einem Bereich von 180° des Wirkkreises.

Bei einem weiteren vorteilhaften Verfahren führt die Wechseleinrichtung bzw. der Wechselroboter beim Entnehmen und/oder Anordnen der Blasformeinrichtung von den Stationen bzw. an den Blasformträgern eine relativ zu dem Teilkreis der Vorrichtung radiale Bewegung auf. Dabei kann es sich um eine rein radiale Bewegung handeln, es wäre jedoch auch denkbar, dass es sich um eine Bewegung mit einer radialen Komponente handelt.

Bei einem weiteren vorteilhaften Verfahren führt die Wechseleinrichtung bzw. der Wechselroboter beim Entnehmen und/oder Anordnen der Blasformeinrichtung von den Stationen bzw. an den Blasformträgern eine im Wesentlichen vertikale Bewegung aus. Unter im Wesentlichen wird dabei verstanden, dass die Bewegungsrichtung von der exakt vertikalen Richtung um nicht mehr als 20° bevorzugt um nicht mehr als 10° und besonders bevorzugt um nicht mehr als 5° abweicht.

Bei einem weiteren bevorzugten Verfahren werden während eines Wechselvorgangs wenigstens einer Blasformeinrichtung Bestandteile dieser Blasformeinrichtung voneinander getrennt. Unter einem Trennen während des Wechselvorgangs wird dabei Bezug genommen auf den gesamten Wechselvorgang, d.h. den gesamten Zeitraum zwischen dem Entnehmen einer Blasformeinrichtung und dem Einbau bzw. der Montage einer weiteren Blasformeinrichtung in eine Blasformstation. Bei dieser Ausgestaltung wird bevorzugt nicht die gesamte Blasformeinrichtung entnommen, sondern lediglich Bestandteile derselben gewechselt, beispielsweise die Seitenteile. So ist es möglich, dass zunächst eine gesamte zusammengesetzte Blasformeinrichtung entnommen wird, anschließend die Seitenteile dieser Blasformeinrichtung von dem Bodenteil dieser Blasformeinrichtung getrennt werden, anschließend neue Seitenteile verwendet werden und diese wiederum mit dem ursprünglichen Bodenteil verbunden werden und anschließend die so wieder zusammengesetzte Blasformeinrichtung an der Blasformstation montiert wird.

Es wird wiederum darauf hingewiesen, dass auch diese Variante, nämlich das Trennen von Bestandteilen der Blasformeinrichtung während des Wechselvorgangs unabhängig von dem oben beschriebenen Verfahren verwendet werden kann, d.h. unabhängig von der Schwenkbarkeit des Greifarms. Die Anmelderin behält sich daher vor, Schutz für ein Verfahren nach dem Oberbegriff des unabhängigen Verfahrensanspruchs zu beanspruchen, welches durch das Trennen von Bestandteilen der Blasformeinrichtung während des Wechselvorgangs gekennzeichnet ist.

Bevorzugt wird bei einem entsprechenden Wechselvorgang wenigstens ein Bestandteil der Blasformeinrichtung nicht gewechselt. Insbesondere wird bei wenigstens einem Wechselvorgang wenigstens ein Seitenteil gewechselt, nicht jedoch ein Bodenteil der Blasformeinrichtung.

Bei einem weiteren Verfahren wäre es auch denkbar, dass die Blasstation derart während eines Wechselvorgangs angesteuert wird, dass eine Verbindung der Seitenteile mit dem Bodenteil zumindest zeitweise aktiv getrennt werden kann. Bei dieser Ausgestaltung wäre es möglich, dass das Bodenteil separat und getrennt zunächst durch insbesondere eine Linearbewegung (und bevorzugt einer Bewegung in einer Längsrichtung von zu expandierenden Behältnissen) von den Seitenteilen entfernt wird, um anschließend nur die Seitenteile aufzunehmen. Dabei wäre es beispielsweise möglich, dass die noch an der Umformungsstation angeordnete Blasformeinrichtung geöffnet wird (wie dies auch im Arbeitsbetrieb möglich ist), anschließend das Bodenteil weggefahren wird, anschließend die Blasformeinrichtung wieder geschlossen und in diesem geschlossenen Zustand (jedoch ohne das Bodenteil) demontiert wird.

Bei einem weiteren vorteilhaften Verfahren ist es auch möglich, dass die Blasformeinrichtung beim Wechselvorgang derart angesteuert wird, dass die Verbindung der Seitenteile mit dem Bodenteil zumindest zeitweise aktiv getrennt werden kann. Dabei wäre es möglich, dass direkt in der Blasformeinrichtung aktive Verbindungselemente vorhanden sind, um nur die Formteile aufzunehmen. Weiterhin wäre es möglich, dass für den gesamten Wechselvorgang diese aktiven Kopplungselemente angesprochen bzw. aktiviert werden.

Bei einem weiteren bevorzugten Verfahren ist es möglich, dass ein Bodenteil der Blasformeinrichtung insbesondere für einen Wechselvorgang bewegt und insbesondere gedreht wird und dadurch die Verbindung der Seitenteile mit dem Bodenteil zumindest zeitweise aktive getrennt werden kann. Zu diesem Zweck können die Zentrierungen der Bodenteile eine Verzahnung aufweisen, um (nur) die Seitenteile aufzunehmen.

Bei einem weiteren vorteilhaften Verfahren wäre es denkbar, dass ein Bodenteil vor dem Wechseln der Seitenteile insbesondere mit einer Greifeinrichtung entnommen und "geparkt" wird, um bei einem anschließenden Wechseln der Seitenteile diese nicht mit wechseln zu müssen.

Weitere Vorteile und Ausführungsformen ergeben sich aus den beigefügten Zeichnungen.

Darin zeigen:
- Fig. 1: Eine schematische Darstellung einer erfindungsgemäßen Vorrichtung;
- Fig. 2: eine Darstellung der Vorrichtung mit dargestellter Wechseleinrichtung;
- Fig. 3: eine Draufsicht auf die in Fig. 2 gezeigte Vorrichtung;
- Fig. 4: eine weitere Darstellung der in Fig. 2 gezeigten Vorrichtung;
- Fig. 5: eine weitere Darstellung der in Fig. 2 gezeigten Vorrichtung in einer weiteren Betriebsposition;
- Fig. 6: eine Darstellung einer Umformungsstation;
- Fig. 7: eine Darstellung einer Formschale für eine Blasformeinrichtung;
- Fig. 8: eine Darstellung einer Wechseleinrichtung;
- Fig. 9: eine Darstellung einer Greifeinrichtung zum Greifen einer Blasformeinrichtung;
- Fig. 10: eine Darstellung einer Wechseleinrichtung mit einer Blasformeinrichtung;
- Fig. 11: eine Darstellung zur Veranschaulichung möglicher Positionen der Wechseleinrichtung;
- Fig. 12: eine Darstellung eines Magazins mit einer Blasformeinrichtung;
- Fig. 13a - 13h: Darstellungen zur Veranschaulichung eines teilweisen Wechsels einer Blasformeinrichtung;
- Fig. 14a,b: zwei Darstellungen einer Greifeinrichtung; und
- Fig. 15a, b: zwei weitere Darstellungen einer Greifeinrichtung.

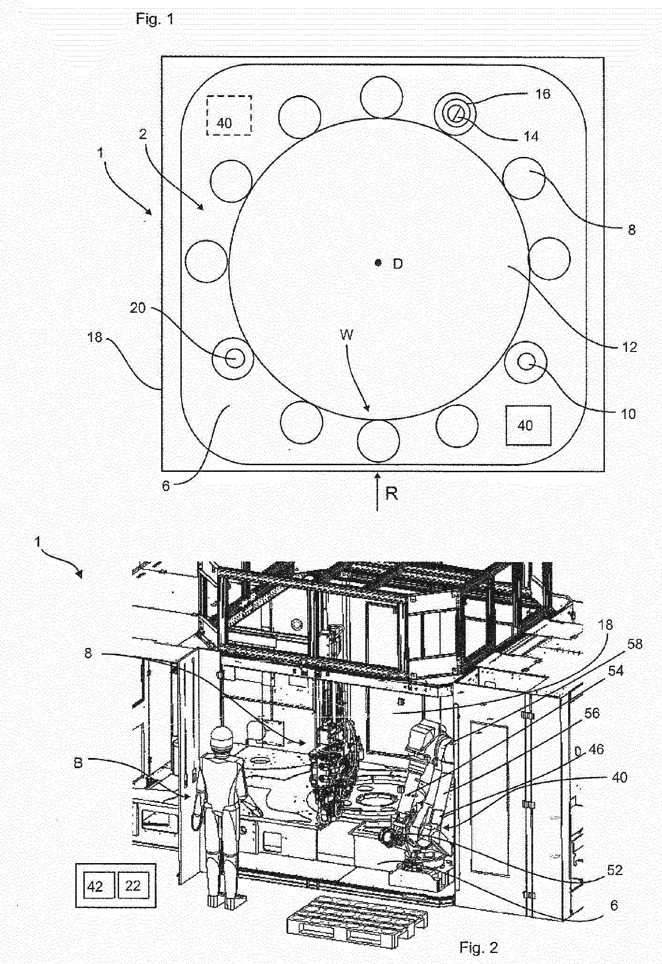

Fig. 1 zeigt eine schematische Darstellung einer Vorrichtung 1 zum Umformen von Kunststoffvorformlingen zu Kunststoffbehältnissen. Dabei werden die Kunststoffvorformlinge 10 den einzelnen Umformungsstationen 8 zugeführt und zu Kunststoffbehältnissen 20 expandiert. Nach dieser Expansion werden die Kunststoffbehältnisse wieder von der Vorrichtung entnommen. Zu diesem Zwecke kann ein Zuführstern vorgesehen sein, der die Kunststoffvorformlinge der Vorrichtung 1 zuführt sowie auf eine Abführeinrichtung, insbesondere ebenfalls ein Transportstern, der die fertiggestellten Behältnisse von der Vorrichtung abführt. Die Vorrichtung 1 weist einen Stationsträger 12 auf, an dem eine Vielzahl von Umformungsstationen 8 angeordnet ist. Dieser Stationsträger kann dabei beispielsweise, wie in Fig. 1 gezeigt, ein Blasrad sein, welches bezüglich einer Drehachse D (welche hier senkrecht zu der Figurenebene und damit vertikal verläuft) drehbar ist. Jede einzelne Umformungsstation weist dabei jeweils eine Blasformeinrichtung 14 auf. Diese Blasformeinrichtung 14 setzt sich aus zwei Seitenteilen und einem Bodenteil zusammen. Diese Blasformeinrichtungen können gemäß der Erfindung ausgewechselt werden. Die Blasformeinrichtungen 14 sind dabei an Blasformträgern 16 angeordnet und können von diesen entnommen bzw. an diesen angeordnet werden.

Das Bezugszeigen 40 kennzeichnet eine Wechseleinrichtung, welche dazu dient, die Blasformeinrichtungen von deren Blasformträgern zu entfernen oder die Blasformeinrichtungen an den Blasformträgern anzuordnen. Das Bezugszeichen 6 kennzeichnet einen Basisträger, an dem der Stationsträger 12 drehbar gelagert ist. An bzw. neben dem Basisträger 6 ist auch die Wechseleinrichtung 40 angeordnet. Damit kann die Wechseleinrichtung 40 in die Vorrichtung integriert werden. Das Bezugszeichen 18 kennzeichnet ein Gehäuse, welches zumindest teilweise den Stationsträger 12 umgibt, welches jedoch bevorzugt, wie unten gezeigt wird, auch die Wechseleinrichtung 40 einschließen bzw. einhausen kann.

Das Bezugszeichen W kennzeichnet eine Wechselposition. Wie oben erwähnt, werden die Blasformeinrichtungen bevorzugt an einer bestimmten Wechselposition eingewechselt. Dies bedeutet, dass die Umformungsstationen durch eine Drehung des Trägers 12 sukzessive in diese Wechselposition W gefahren werden können und dieser Wechselposition dann die alten Blasformeinrichtungen entnommen und bevorzugt auch neue Blasformeinrichtungen zugeführt werden können. Das Bezugszeichen R kennzeichnet eine radiale Richtung. In dieser radialen Richtung wird die Wechseleinrichtung bzw. eine Greifeinrichtung der Wechseleinrichtung bevorzugt auf die Umformungsstationen bzw. die Blasformeinrichtungen zugestellt, um diese zu wechseln.

Fig. 2 zeigt eine perspektivische Darstellung einer Vorrichtung 1, wobei hier lediglich eine Umformungseinrichtung bzw. Umformungsstation 8 dargestellt ist. Der Stationsträger an dem diese angeordnet ist, ist hier ebenfalls nicht dargestellt. Weiterhin erkennt man jedoch wieder den Basisträger 6, an dem die Wechseleinrichtung 40 angeordnet ist. Diese Wechseleinrichtung 40 weist hier einen ersten schwenkbaren Arm 56 sowie einen zweiten schwenkbaren Arm 54 auf. Über eine Gelenk- und Antriebsverbindung sind diese beiden Arme schwenkbar miteinander verbunden.

Das Bezugszeichen 52 kennzeichnet eine Greifeinrichtung, welche dazu dient, um die Blasformeinrichtungen zu greifen und zu transportieren. Diese Greifeinrichtung ist dabei wiederum schwenkbar an dem zweiten Arm 54 angeordnet und bevorzugt auch drehbar. Damit ist insgesamt die Greifeinrichtung um wenigstens drei, bevorzugt um wenigstens vier Achsen im Raum schwenkbar. Daneben wäre es auch möglich, wie durch das gestrichelte Rechteck dargestellt ist, dass mehrere Wechseleinrichtungen vorgesehen sind, wobei diese insbesondere jeweils wenigstens mittelbar an dem Basisträger 6 angeordnet sind. Auf diese Weise könnten in einem Wechselbetrieb schneller die einzelnen Blasformeinrichtungen ausgewechselt werden.

Das Bezugszeichen 46 kennzeichnet schematisch eine Erfassungseinrichtung, welche auf die Wechseleinrichtung 40 bzw. die Greifeinrichtung 52 wirkende Kräfte erfasst, um so im Notfall abschalten zu können. Vorteilhaft weist die Vorrichtung mehrere derartiger Erfassungseinrichtungen auf, wobei bevorzugt jeder einzelnen Antriebseinrichtung, welche ein Bewegen der Wechseleinrichtung 40 bzw. der Greifeinrichtung 52 bewirkt, zugeordnet ist. Bei diesen Erfassungseinrichtungen kann es sich beispielsweise um Kraftmesseinrichtungen handeln, welche tatsächliche Kräfte, Drehmomente und dergleichen bestimmen. Es wäre jedoch auch möglich, dass die Kräfte aus Parametern des jeweiligen Antriebs bestimmt werden, etwa aus Strömen oder dergleichen.

Das Bezugszeichen B kennzeichnet einen Benutzer, der die Anlage bedient. Dieser kann sich vorteilhaft während eines Betriebs der Wechseleinrichtung nicht in Bereichen bewegen, welche von der Wechseleinrichtung 40 erreicht werden können.

Das Bezugszeichen 22 kennzeichnet eine Steuerungseinrichtung zum Steuern der Wechseleinrichtung. Das Bezugszeichen 42 kennzeichnet eine Steuerungseinrichtung zum Steuern der Umformungseinrichtung selbst. Dabei können diese beiden Steuerungseinrichtungen miteinander interagieren, insbesondere für einen Wechselbetrieb zum Auswechseln der Blasformeinrichtungen. Es ist dabei möglich, dass die Wechseleinrichtung 40 in einem normalen Arbeitsbetrieb der Vorrichtung in eine Ruhestellung verfährt, in der die Wechseleinrichtung einen möglichst geringen Platz einnimmt.

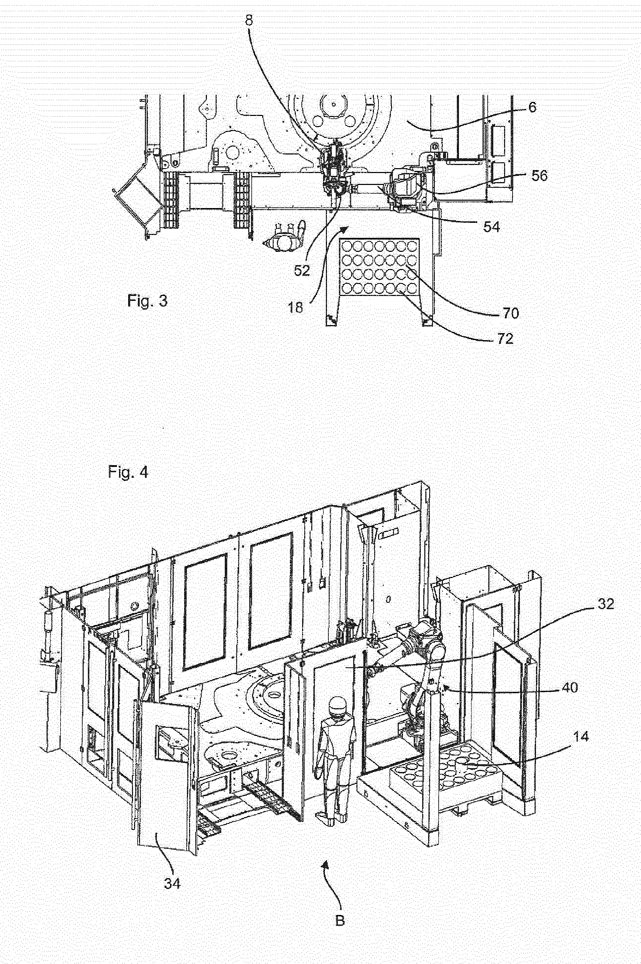

Fig. 3 zeigt eine Draufsicht auf die in Fig. 2 gezeigte Vorrichtung. Man erkennt hier, dass die Wechseleinrichtung 40 ebenfalls in das Gehäuse 18 integriert ist. Bei dem in Fig. 3 gezeigten Zustand ist der Arm 56 gerade ausgeschwenkt, sodass die Greifeinrichtung 52 gerade eine Blasformeinrichtung greifen kann.

Daneben ist auch eine Magazineinrichtung 70 dargestellt, welche eine Vielzahl von Aufnahmestellen 72 zum Aufnehmen der Blasformeinrichtungen aufweist. Diese Blasformeinrichtungen können dabei jeweils in die Aufnahmestellen bzw. Löcher 72 eingefahren werden.

Fig. 4 zeigt eine weitere Darstellung der erfindungsgemäßen Vorrichtung. Man erkennt, dass hier eine Wandung 32 vorgesehen ist, welche den Benutzer B von der Wechseleinrichtung 40 abtrennt, sodass dieser nicht verletzt werden kann. Daneben können auch weitere bewegbare Wandungsteile 34 vorgesehen sein, damit einerseits die Maschine leichter für Wartungszwecke zugänglich ist, oder andererseits auch weitere Wechseleinrichtungen vorgesehen sein können, wie auch in Fig. 1 dargestellt.

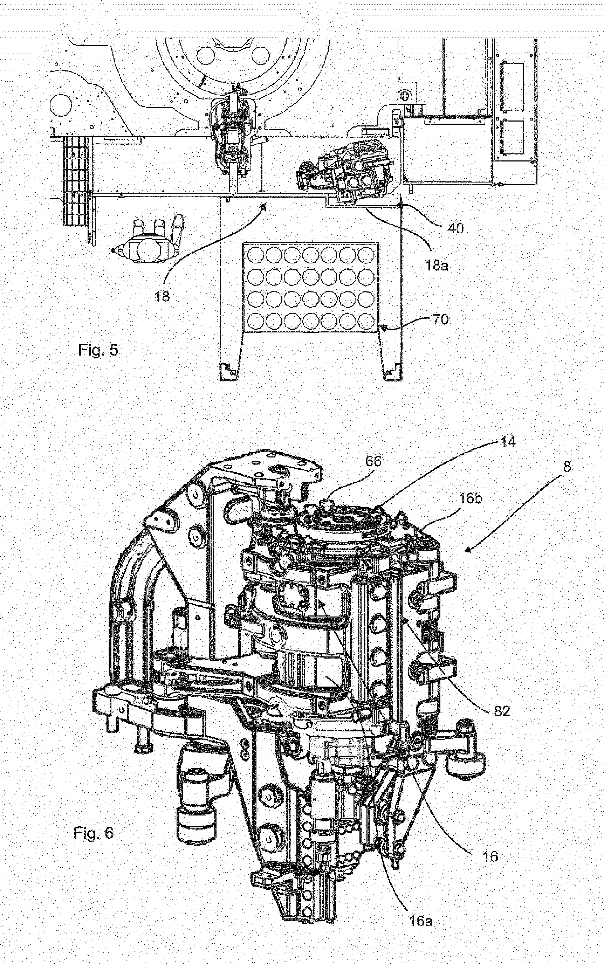

Die in Fig. 5 gezeigte Darstellung ähnelt der in Fig. 3 gezeigten Darstellung, wobei jedoch hier die Wechseleinrichtung 40 in einer anderen Betriebsposition ist. Hier kann es sich beispielweise um einen Arbeitsbetrieb handeln, bei dem die Vorrichtung Kunststoffvorformlinge zu Kunststoffbehältnissen umformt. Man erkennt, dass in dem Gehäuse 18 eine Ausnehmung 18a angeordnet sein kann, welche auch zum vollständigen Aufnehmen der Wechseleinrichtung 40 dient. Bei dem in Fig. 5 gezeigten Zustand können die einzelnen Arme der Wechseleinrichtung 40 so eingeklappt sein, dass die Wechseleinrichtung 40 einen nur geringen Platz einnimmt.

Fig. 6 zeigt eine Darstellung einer Umformungsstation 8. Man erkennt hier den Blasformträger 16, der zwei Blasformträgerteile 16a, 16b aufweisen kann, die auseinandergeschwenkt werden können, um die Blasformeinrichtung 14 zu öffnen und zu schließen. Auch für den Wechselbetrieb können die beiden Blasformträgerteile 16a, 16b auseinandergeschwenkt werden, um die Blasformeinrichtung 14 entnehmen zu können.

Das Bezugszeichen 82 kennzeichnet in seiner Gesamtheit eine Verriegelungseinrichtung, welche im Arbeitsbetrieb die beiden Blasformträgerteile 16a und 16b miteinander verriegelt, sodass auch bei größeren Drücken diese nicht auseinanderschwenken. Das Bezugszeichen 66 bezieht sich auf einen Vorsprung, der jeweils an den beiden Seitenteilen der Blasformeinrichtung 14 angeordnet ist. Dieser Vorsprung ist dabei so stabil ausgeführt, dass die gesamte Blasformeinrichtung 14 an diesem Vorsprung getragen werden kann. Dieser Vorsprung 66 kann dabei von der Greifeinrichtung bzw. einem Bestandteil der Greifeinrichtung hintergriffen werden, sodass die Greifeinrichtung 52 die Blasformeinrichtung über diesen Vorsprung tragen kann. Über ein Halten der jeweiligen Seitenteile der Blasformeinrichtung an den Vorsprüngen 66 kann auch die Blasformeinrichtung in ihrer Gesamtheit zusammengehalten werden.

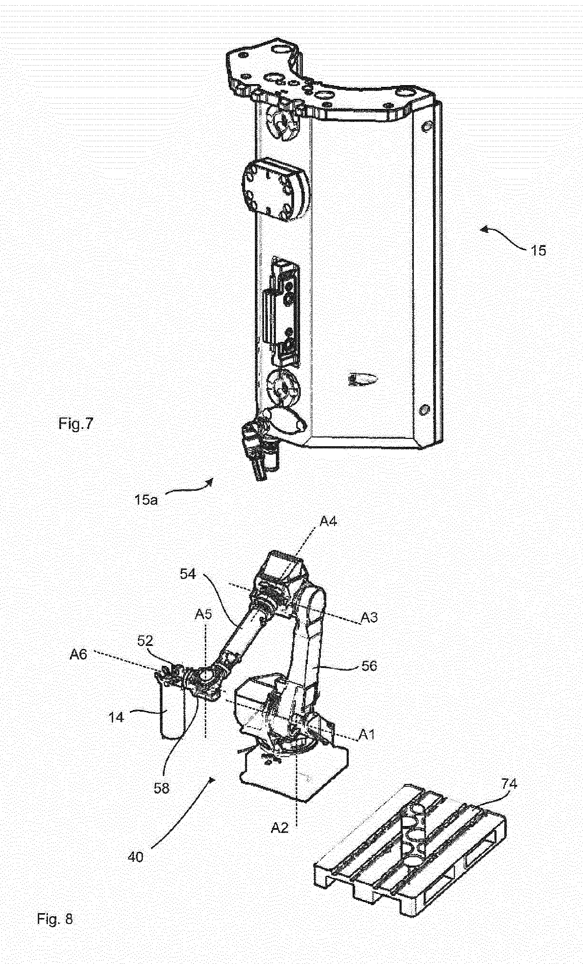

Fig. 7 kennzeichnet eine Blasformträgerschale. Diese Blasformträgerschale 15 kann an den Blasformträger 16 angeordnet sein und wiederum selbst die Blasformeinrichtung bzw. Teile der Blasformeinrichtung aufnehmen. Dabei können Zuführ- und Abführelemente 15a vorgesehen sein, um der Blasformschale 15 Medien, wie beispielsweise Temperiermedien, zuzuführen.

Fig. 8 zeigt eine weitere Darstellung der Wechseleinrichtung 40. Dabei ist wiederum der erste Arm 56 dargestellt, der bezüglich einer ersten Achse A1 schwenkbar ist. Daneben ist jedoch dieser Arm 56 auch bezüglich einer zweiten Achse A2 drehbar. An diesen ersten Arm 56 ist ein zweiter Arm 54 angeordnet und dabei ist der Arm 54 bezüglich einer Achse A3 gegenüber dem ersten Arm 56 schwenkbar. Hier sind die beiden Achsen A1 und A3 parallel zueinander. Diese Achsen können jedoch auch schräg bzw. windschief zueinander angeordnet sein. Daneben ist der zweite Arm 54 auch bezüglich einer vierten Achse A4 drehbar.

Zur Erreichung dieser jeweiligen Schwenk- und Drehbewegung bezüglich der einzelnen Achsen und auch bezüglich der weiteren noch zu beschreibenden Achsen sind jeweils Antriebseinrichtungen, wie insbesondere, aber nicht ausschließlich, elektromotorische Antriebe, vorgesehen. Daneben wäre jedoch auch die Verwendung von pneumatischen und/oder hydraulischen Antrieben denkbar. An dem zweiten Arm 54 ist eine Greifeinrichtung 52 vorgesehen, welche zum Greifen der Blasformeinrichtung dient. Dieses Greifelement ist dabei bezüglich einer Achse A5 gegenüber dem Arm 54 schwenkbar. Diese Achse A5 kann hier senkrecht zu der Achse A3 und/oder auch senkrecht zu der Achse A4 stehen. Daneben ist die Greifeinrichtung über einen Träger 58 an den Arm 54 angeordnet. Die Greifeinrichtung selbst kann wiederum gegenüber diesem Träger 58 bezüglich einer Achse A6 drehbar sein.

Mittels dieser Vielzahl von Bewegungen können die Blasformeinrichtungen 14 von der einzelnen Umformungsstation abgenommen und auf einen Träger 74, der hier als Europalette dargestellt ist, gestellt werden. Es wäre jedoch auch möglich, die Blasformeinrichtungen 14 direkt in vorgesehene Öffnungen eines Magazins einzubringen.

Ein Abstand zwischen der Magazineinrichtung oder der Palette 74 und der Wechseleinrichtung 40 kann dabei zwischen 1 Meter und 2 Metern liegen. Auch ein entsprechender Aktionsradius der Wechseleinrichtung kann in einem Bereich von 1,5 Metern liegen.

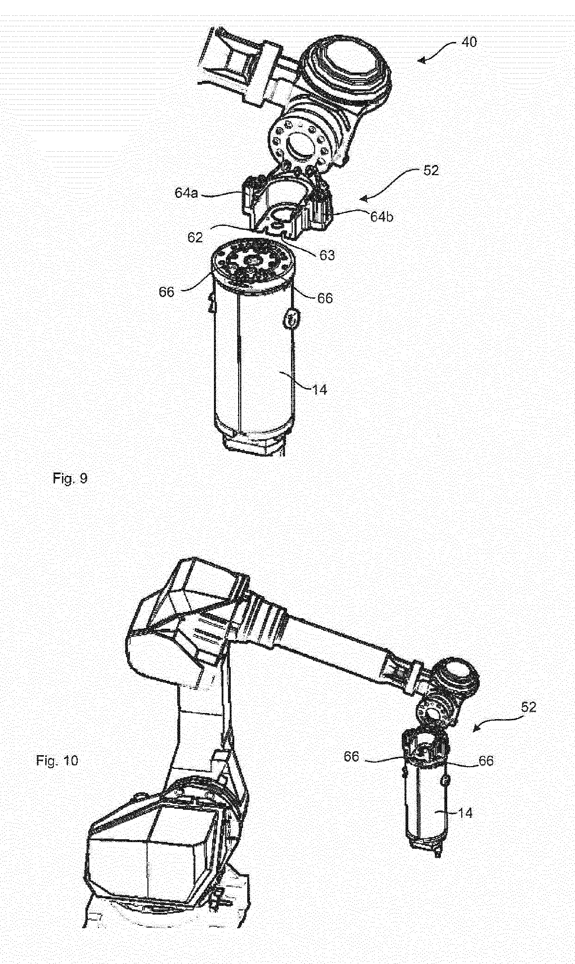

Fig. 9 zeigt eine Detaildarstellung der Wechseleinrichtung 40 bzw. deren Greifeinrichtung 52. Diese Greifeinrichtung kann dabei ein Führungselement 62 aufweisen, welches über eine entsprechende Oberfläche der Blasformeinrichtung geführt werden kann. Daneben können auch Vorsprünge 64a, 64b vorgesehen sein, welche zum Zentrieren der Wechseleinrichtung 40 bzw. genauer der Greifeinrichtung gegenüber der Umformungsstation dienen. Das Bezugszeichen 63 bezieht sich auf eine in dem Führungselement 62 angeordnete Ausnehmung, welche zum Wechseln der Blasformeinrichtung die Vorsprünge hintergreifen kann. Damit dient das Führungselement 62 auch zum Tragen der Blasformeinrichtung 14.

Fig. 10 zeigt eine Darstellung der Wechseleinrichtung mit einer daran angeordneten Blasformeinrichtung 14. Man erkennt, dass der Greifarm 52 hier in zwei Vorsprünge 66, die an der Blasformeinrichtung 14 angeordnet sind, eingreift und diese zusammendrückt, sodass auf diese Weise die Blasformeinrichtung zusammengehalten wird. Damit dienen die auch in Fig. 9 und Fig. 6 gezeigten Vorsprünge 66, die an der Blasformeinrichtung 14 angeordnet sind, zum Zusammenhalten derselben während deren Transports. Damit greift vorteilhaft die Greifeinrichtung 52 oberhalb der Blasformeinrichtung 14 in Elemente derselben ein, um diese zu halten. Diese Art des Eingreifens in die Blasformeinrichtung eignet sich in besonderer Weise, da die Blasformeinrichtung, wie auch in Fig. 6 gezeigt, über ihren Träger hinaussteht und auf diese Weise auch in einem geschlossenen Zustand des Blasformträgers 16 gegriffen werden kann. So ist es möglich, dass die Wechseleinrichtung bzw. der Roboter zunächst die Blasformeinrichtung 14 über deren Vorsprünge 66 greift und erst anschließend der Blasformträger geöffnet. Auf diese Weise kann sichergestellt werden, dass die Blasformeinrichtung zu jedem Zeitpunkt sicher gehalten wird.

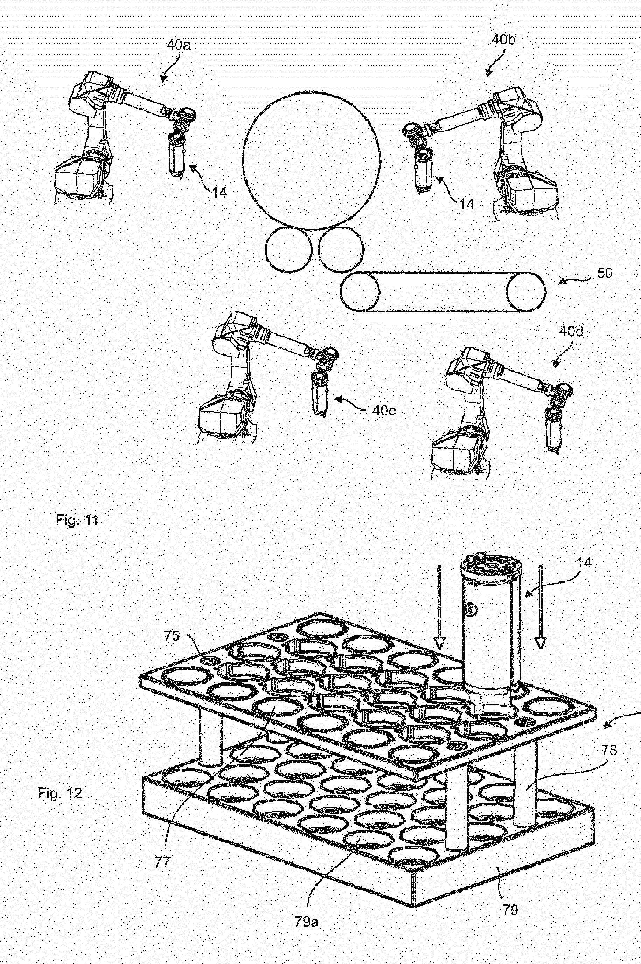

Fig. 11 zeigt eine weitere Darstellung der vorliegenden Erfindung. Hier sind mehrere Wechseleinrichtungen 40a - 40d vorgesehen, mit denen jeweils Elemente der Vorrichtung gewechselt werden können. Dabei wäre es beispielsweise möglich, dass zwei der Wechseleinrichtungen (40a, 40b) vorgesehen sind, um Blasformeinrichtungen 14 zu wechseln, dass aber auch weitere Wechseleinrichtungen vorgesehen sind, die andere Elemente auswechseln, wie beispielsweise Heizdorne, die sich in einem Ofen 50 zum Erwärmen der Kunststoffvorformlinge befinden (die Wechseleinrichtung 40d). Daneben können mit der gezeigten Wechseleinrichtung 40c beispielsweise auch Halteelemente, wie Transferzangen, gewechselt werden, welche die Kunststoffvorformlinge nach ihrer Erwärmung zu der Umformungseinrichtung 1 transportieren.

Fig. 12 zeigt eine Aufnahmeeinrichtung wie ein Magazin zum Aufnehmen der Blasformeinrichtungen 14. Dieses kann dabei eine Trägerplatte 75 enthalten, welche eine Vielzahl von Öffnungen 77 aufweist. Mittels Trägern 78 kann diese Platte 75 an einen Bodenträger 79 angeordnet sein, wobei dieser Bodenträger 79 wiederum Öffnungen 79a bzw. Löcher zum Aufnehmen der Blasformeinrichtungen aufweist. Vorteilhaft weist dieses Magazin die gleichen Abmessungen auf, wie eine sogenannte Europalette und damit vorzugsweise Abmessungen in einem Bereich von 1200 x 800 mm. Die einzelnen Öffnungen 79a sind dabei, wie in Fig. 12 gezeigt, in Reihen angeordnet und gegeneinander versetzt, sodass eine möglichst große Anzahl an Blasformeinrichtungen in die Palette eingebracht werden kann.

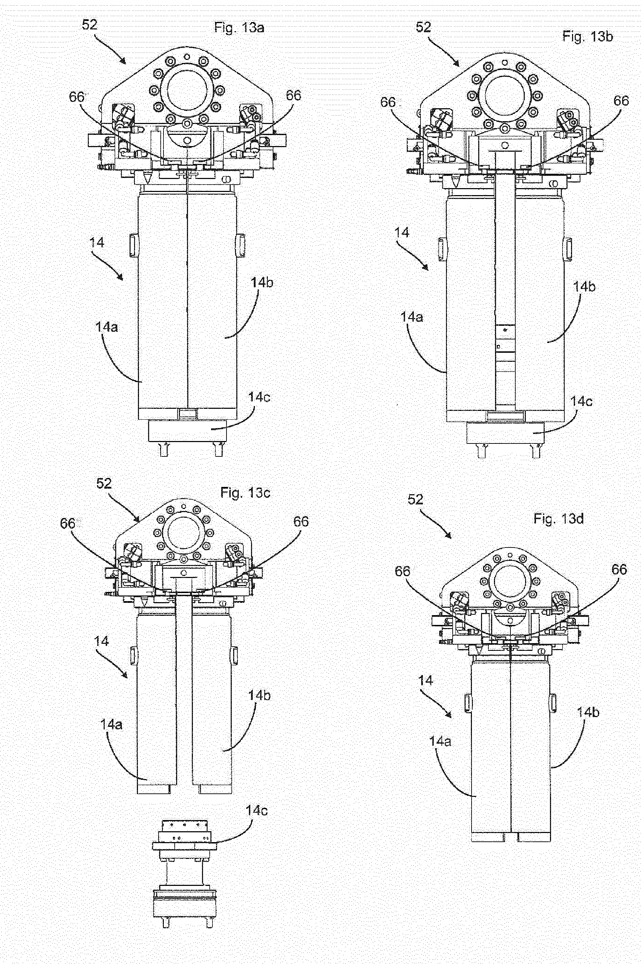

Die Figuren 13a - 13h veranschaulichen einen Wechselprozess für eine Blasformeinrichtung, bei der nicht die vollständige Blasformeinrichtung gewechselt werden soll sondern nur deren Seitenteile. Bei der in Figur 13a gezeigten Darstellung ist eine vollständige Blasformeinrichtung 14 an einer Greifeinrichtung 52 angeordnet. Hier entnimmt die Greifeinrichtung 52 die gesamte Blasformeinrichtung, d.h. sowohl die beiden Seitenteile 14a und 14b als auch das Bodenteil 14c, welches an die Seitenteile 14a und 14b mechanisch gekoppelt ist, von der Blasformmaschine. In einem weiteren Schritt wird die gesamte Blasformeinrichtung 14 auf einem (nicht gezeigten) Ablageplatz für das Bodenteil 14c abgestellt bzw. angeordnet. In einem weiteren Verfahrensschritt öffnet sich die Greifeinrichtung 52, wie in Figur 13d gezeigt. Zu diesem Zweck können zwei unten genauer erläuterte Halteelemente der Greifeinrichtung 52 auseinandergeschoben werden können, um so auch die beiden Seitenteile 14a und 14b auseinanderzufahren.

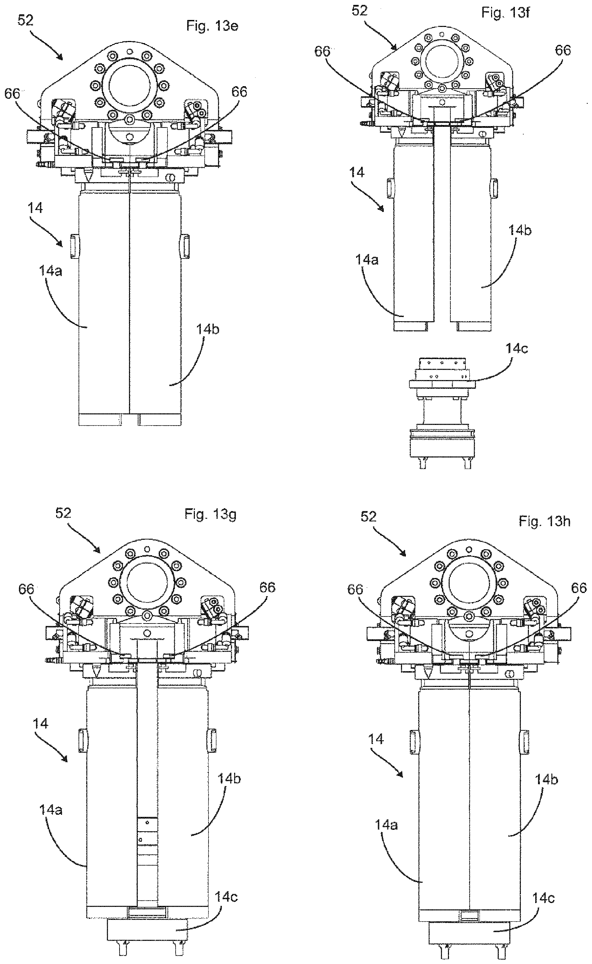

Bei der in Figur 13c gezeigten Situation bewegt sich die Greifeinrichtung 52 mit den daran nur noch angeordneten Seitenteilen 14a und 14b nach oben. Das Bodenteil 14c verbleibt an seinem Ablageplatz. Bei der in Figur 13d gezeigten Situation werden die beiden Seitenteile 14a und 14b in einem entsprechenden (nicht gezeigten) Lager abgelegt. Weiterhin werden - wie in Figur 13e gezeigt - neue Seitenteile 14a und 14b aus dem (nicht gezeigten) Lager entnommen. Bei der in Figur 13f gezeigten Situation werden diese beiden Seitenteile wieder auseinandergefahren und bei entsprechend geöffneter Greifeinrichtung über dem alten Bodenteil 14c platziert. Diese Situation ist auch in Figur 13g gezeigt. Bei dieser Situation wurden die beiden Seitenteile 14a und 14b nach unten bewegt und bei dem nunmehr folgenden Schließen der Greifeinrichtung 52 wird das alte Bodenteil von den beiden Blasformseitenteilen 14a und 14b aufgenommen.

Schließlich können die neuen Seitenteile 14a und 14b sowie das ursprüngliche Bodenteil 14c wieder an einem Formträger (nicht gezeigt) befestigt werden, wie in Figur 13h veranschaulicht.

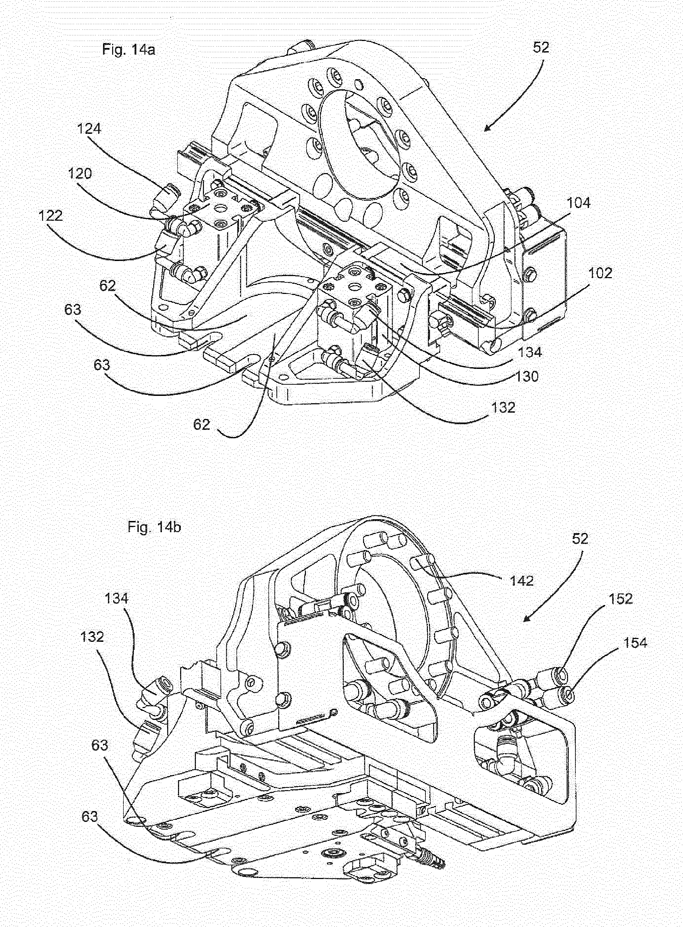

Die Figuren 14a und 14b zeigen eine Darstellung einer Greifeinrichtung, welche auch dazu geeignet und bestimmt ist, die beiden Seitenteile auseinanderzubewegen, um so das Bodenteil freizugeben. Dabei zeigt Figur 14a eine Ansicht von oben auf die Greifeinrichtung und Figur 14b eine Ansicht von unten. Man erkennt, dass diese Greifeinrichtung 52 wieder die beiden Führungselemente 62 aufweist, in denen die Ausnehmungen 63 (zur Aufnahme der an den Seitenteilen angeordneten Vorsprünge 66 angeordnet sind. Während jedoch bei der oben gezeigten Ausführungsform dieses Führungselement 62 einteilig ausgebildet war, sind nunmehr zwei derartige Führungselemente 62 vorgesehen, welche auseinandergefahren werden können. Zu diesem Zweck sind diese Führungselemente 62 (und damit auch die Ausnehmungen 63) jeweils über einen Schlitten 104 an einem Träger 102 angeordnet und können gegenüber diesem bewegt werden. Das Bezugszeichen 120 bezieht sich auf eine erste Antriebseinrichtung, um das in Figur 14a gezeigte linke Führungselement zu bewegen und das Bezugszeichen 130 bezieht sich auf eine Antriebseinrichtung, um das in Figur 14a rechts dargestellte Führungselement 62 zu bewegen. Die Bezugszeichen 122, 124, 132 und 134 kennzeichnen Kommunikationsverbindungen zum Anschließen eines Hydraulik- oder Pneumatikmittels. In Figur 14b sind Haltelemente 142 dargestellt, um die Greifeinrichtung 52 an einem Arm zu befestigen. Daneben sind weitere Anschlüsse 152, 154 für Hydraulik- oder Pneumatikmittel vorgesehen, um auch weitere Bewegungsfreiheitsgrade, wie etwa ein Schwenken der Führungselemente 62 in ihrer Gesamtheit zu bewirken oder auch Linearverschiebungen.

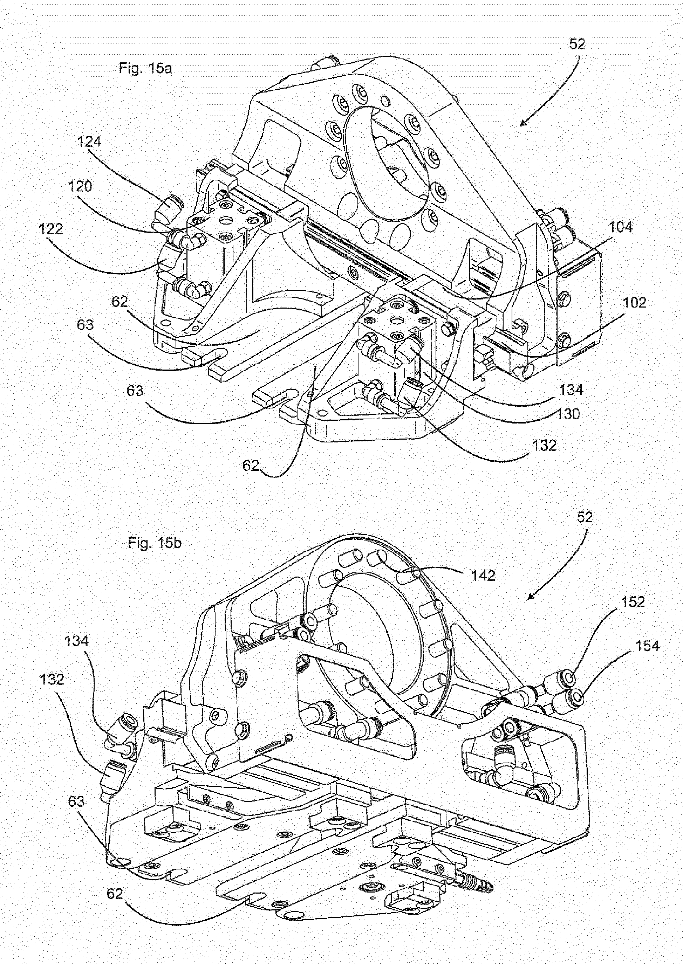

Bei der in den Figuren 15a und 15b gezeigten Ausgestaltungen sind die Führungselemente 62 auseinandergestellt bzw. voneinander entfernt. Entsprechend sind auch die Seitenteile, deren Vorsprünge in den Ausnehmungen 63 ruhen, auseinandergestellt, so dass - wie unter Bezugnahme auf die Figuren 13a - 13h erläutert - nunmehr das Bodenteil von den Seitenteilen entfernt werden kann.

Damit ermöglicht die Greifeinrichtung 52 bei dieser Ausgestaltung eine Relativbewegung zwischen den Führungselementen 63 bzw. Halteelementen 62, welche zum Halten bzw. Führen der Seitenteile 14a, 14b der Blasformeinrichtung 14 dienen. Dabei sind die beiden Führungselemente 62 jeweils entlang einer geradlinigen Richtung bewegbar, um so die Seitenteile der Blasformeinrichtung voneinander zu entfernen bzw. aufeinander zuzustellen.

Bevorzugt handelt es sich - wie oben erwähnt - bei den Antrieben zur Durchführung dieser Auseinander- und Zusammenbewegung der Seitenteile um pneumatische Antriebe. Als Magazine zum Ablegen der Blasformeinrichtungen können Standardmagazine verwendet werden.

### Bezugszeichenliste

- 1: Vorrichtung / Umformungseinrichtung
- 6: Basisträger
- 8: Umformungsstationen
- 10: Kunststoffvorformlinge
- 12: Stationsträger
- 14: Blasformeinrichtung
- 14a, 14b: Seitenteile der Blasformeinrichtung
- 14c: Bodenteil der Blasformeinrichtung
- 15: Blasformschale
- 15a: Zu- und Abführelement für Temperiermedium
- 16: Blasformträger
- 16a 16b: Blasformträgerteile
- 18: Gehäuse
- 18a: Ausnehmung
- 20: Kunststoffbehältnisse
- 22: Steuerungseinrichtung zum Steuern der Wechseleinrichtung
- 32: Wandung
- 34: Wandungsteile
- 40: Wechseleinrichtung
- 40a-40d: Wechseleinrichtung
- 42: Steuerungseinrichtung zum Steuern der Umformungseinrichtung
- 46: Erfassungseinrichtung
- 50: Ofen
- 52: Greifeinrichtung
- 54: zweiter schwenkbarer Arm
- 56: erster schwenkbarer Arm
- 58: Träger
- 62: Führungselement
- 63: Ausnehmung
- 64a, 64b: Vorsprünge
- 66: Vorsprünge
- 70: Magazineinrichtung
- 72: Löcher
- 74: Träger / Palette
- 75: Trägerplatte
- 77: Öffnungen
- 78: Träger
- 79: Bodenträger
- 79a: Öffnungen / Löcher
- 82: Verriegelungseinrichtung
- 120,130: Antriebe
- 122, 124: Kommunikationsverbindungen
- 132, 134: Kommunikationsverbindungen
- 142: Halteelemente
- 142, 154: Anschlüsse

- D: Drehachse
- B: Benutzer
- A1 - A6: Achsen
- W: Wechselposition
- R: radiale Richtung

## Patentansprüche

1. Vorrichtung zum Umformen von Kunstoffvorformlingen (10) zu Kunststoffbehältnissen (20) mit einer Transporteinrichtung (2), welche die Kunststoffvorformlinge (10) entlang eines vorgegebenen Transportpfads transportiert, wobei die Transporteinrichtung (2) einen beweglichen und zumindest mittelbar an einem stationären Basisträger (6) angeordneten Stationsträger (12) aufweist, an dem eine Vielzahl von Umformungsstationen (8) angeordnet ist, wobei diese Umformungsstationen (8) jeweils Blasformeinrichtungen (14) aufweisen, welche jeweils Hohlräume ausbilden, innerhalb derer die Kunststoffvorformlinge (10) zu den Kunststoffbehältnissen umformbar sind und diese Blasformeinrichtungen jeweils an Blasformträgern (16) angeordnet sind, wobei die Vorrichtung (1) eine Wechseleinrichtung (40) aufweist, welche geeignet und dazu bestimmt ist, zumindest die Blasformeinrichtungen von deren Blasformträgern (16) zu entfernen und/oder Blasformeinrichtungen an den Blasformträgern (16) anzuordnen, wobei diese Wechseleinrichtung (40) eine Greifeinrichtung (52) zum Greifen der Blasformeinrichtung (14) aufweist, wobei diese Greifeinrichtung (52) in wenigstens zwei unterschiedliche Richtungen beweglich und um wenigstens drei unterschiedliche Schwenkachsen (A1, A2...A6) schwenkbar ist, wobei die Greifeinrichtung (52) an einem um wenigstens eine vorgegebene Schwenkachse (A1, A2...A6) schwenkbaren Arm (54) angeordnet ist und die Wechseleinrichtung geeignet dazu ist, wahlweise eine vollständige Blasformeinrichtung oder nur Teile (14a, 14b, 14c) der Blasformeinrichtung (14) zu wechseln, **dadurch gekennzeichnet, dass** die Greifeinrichtung (52) ein Eingriffsmittel (62, 63) aufweist, um wenigstens einen an der Blasformeinrichtung (14) angeordneten Vorsprung (66), also einen Nocken, zu zu hintergreifen, in welchen die Greifeinrichtung (52) einfahrbar ist, wobei der Vorsprung (66) zum Zentrieren der Greifeinrichtung (52) gegenüber der Umformungsstation (8) eingerichtet und vorgesehen ist.

2. Vorrichtung (1) nach Anspruch 1,
**dadurch gekennzeichnet, dass**
die Greifeinrichtung (52) selbst wiederum schwenkbar bzw. drehbar an diesem Arm (54) angeordnet ist.

3. Vorrichtung (1) nach Anspruch 1 oder 2,
**dadurch gekennzeichnet, dass**
wenigstens eine dieser Schwenkachsen (A1, A2...A6) ortsfest ist und bevorzugt diese ortsfeste Schwenkachse (A3, A4) vertikal ausgerichtet ist.

4. Vorrichtung (1) nach zumindest einem der vorhergehenden Ansprüche,
**dadurch gekennzeichnet, dass**
wenigstens eine Schwenkachse (A1, A2...A6) unabhängig von einer Position der Wechseleinrichtung und/oder der Greifeinrichtung, in einer raumfesten Ebene angeordnet ist, insbesondere wobei diese raumfeste Ebene eine horizontale Ebene ist.

5. Vorrichtung (1) nach zumindest einem der vorhergehenden Ansprüche,
**dadurch gekennzeichnet, dass**
wenigstens ein Paar von Schwenkachsen (A1, A2...A6) vorhanden ist, wobei diese beiden Schwenkachsen (A1, A2...A6) unabhängig von einer Position der Wechseleinrichtung und/oder der Greifeinrichtung, senkrecht zueinander stehen oder wenigstens zwei Schwenkachsen (A1, A2...A6) unabhängig von einer Position der Wechseleinrichtung und/oder der Greifeinrichtung, parallel zueinander angeordnet sind.

6. Vorrichtung (1) nach Anspruch 1,
**dadurch gekennzeichnet, dass**
der schwenkbare Arm (54) an einem weiteren um wenigstens eine vorgegebene Schwenkachse schwenkbaren Arm (56) angeordnet ist.

7. Vorrichtung (1) nach dem vorhergehenden Anspruch,
**dadurch gekennzeichnet, dass**
der Vorsprung (66) innerhalb eines durch einen Behältnismittelpunkt beschriebenen Teilkreises angeordnet ist.

8. Vorrichtung (1) nach Anspruch 7,
**dadurch gekennzeichnet, dass**
die Greifeinrichtung (52) ein Führungselement (62) aufweist, wobei das Führungselement (62) über eine entsprechende Oberfläche der Blasformeinrichtung führbar ist, und wobei das Führungselement (62) zumindest eine in dem Führungselement (62) angeordnete Ausnehmung aufweist, welche zum Wechseln der Blasformeinrichtung den Vorsprung (66) hintergreift, sodass das Führungselement (62) auch zum Tragen der Blasformeinrichtung (14) ausgebildet ist.

9. Vorrichtung (1) nach wenigstens einem der vorangegangenen Ansprüche,
**dadurch gekennzeichnet, dass**
die Greifeinrichtung (52) form- und/oder kraftschlüssig mit der Blasformeinrichtung (14) verbindbar ist.

10. Vorrichtung (1) nach wenigstens einem der vorangegangenen Ansprüche,
**dadurch gekennzeichnet, dass**
die Wechseleinrichtung (40) eine Steuerungseinrichtung (42) aufweist, welche eine Entfernung der Blasformeinrichtung von den Blasformträgern und/oder ein Anordnung der Blasformeinrichtung an den Blasformträgern sowohl kraft- als auch weggesteuert durchführt.

11. Vorrichtung (1) nach Anspruch 1,
**dadurch gekennzeichnet, dass**
die Greifeinrichtung (52) ein Herstellen und/oder Lösen einer zwischen Bestandteilen (14a, 14b, 14c) der Blasformeinrichtung bestehenden Verbindung ermöglicht.

12. Verfahren zum Betreiben einer Umformungseinrichtung (1) zum Umformen von Kunststoffvorformlingen (10), gemäß zumindest einem der vorhergehenden Ansprüche, zu Kunststoffbehältnissen (20), wobei in einem Arbeitsbetrieb der Vorrichtung (1) die Kunststoffvorformlinge (10) mittels einer Vielzahl von Umformungsstationen (8) entlang eines vorgegebenen Transportpfads transportiert werden und durch Beaufschlagung mit einem fließfähigen Medium zu den Kunststoffbehältnissen (20) expandiert werden, wobei zum Expandieren der Kunststoffvorformlinge (10) Blasformeinrichtungen (14) verwendet werden, in deren Inneren die Kunststoffvorformlinge (10) zu den Kunststoffbehältnissen (20) expandiert werden, wobei in einem Wechselbetrieb zumindest eine der Blasformeinrichtungen (14) der Vorrichtung (1) entnommen wird und/oder eine der Blasformeinrichtungen (14) an einem Blasformträger (16) der Vorrichtung (1) angeordnet wird, wobei zum Wechseln der Blasformeinrichtungen (14) eine Wechseleinrichtung (40) verwendet wird, welche eine Greifeinrichtung (52) zum Greifen der Blasformeinrichtung (14) aufweist wobei diese Greifeinrichtung (52) in wenigstens zwei unterschiedliche Richtungen beweglich und bezüglich wenigstens dreier Schwenkachsen (A1, A2,...A6) schwenkbar ist, **dadurch gekennzeichnet, dass** die Greifeinrichtung (52) ein Eingriffsmittel (62, 63) aufweist, um wenigstens einen an der Blasformeinrichtung (14) angeordneten Vorsprung (66), ieinen Nocken zu hintergreifen, in welchen die Greifeinrichtung (52) einfahrbar ist, wobei der Vorsprung (66) zum Zentrieren der Greifeinrichtung (52) gegenüber der Umformungsstation (8) eingerichtet und vorgesehen ist.

13. Verfahren nach Anspruch 12,
**dadurch gekennzeichnet, dass**
zwei Blasformträgerteile (16a, 16b) eines Blasformträgers (16) auseinandergeschwenkt werden, um die Blasformeinrichtung (14) zu öffnen und danach während eines Wechselbetriebs die Blasformeinrichtung (14) entnommen wird.

## Claims

1. An apparatus for the shaping of plastics material pre-forms (10) into plastics material containers (20) with a transport device (2) which transports the plastics material pre-forms (10) along a pre-set conveying path, wherein the conveying device (2) has a movable station carrier (12) which is arranged at least indirectly on a stationary base carrier (6) and on which are arranged a plurality of shaping stations (8), wherein these shaping stations (8) have in each case blow moulding devices (14) which form cavities in each case inside which the plastics material pre-forms (10) are capable of being shaped to form the plastics material containers and these blow moulding devices are arranged in each case on blow mould carriers (16),
wherein the apparatus (1) has a changing device (40) which is suitable for and intended for removing at least the blow moulding devices from the blow mould carriers (16) thereof and/or arranging blow moulding devices on the blow mould carriers (16), wherein this changing device (40) has a gripping device (52) for gripping the blow moulding device (14), wherein this gripping device (52) is movable in at least two different directions and is pivotable about at least three different pivot axes (A1, A2 ... A6) and the change device is suitable for optionally changing a complete blow moulding device or only parts (14a, 14b, 14c) of the blow moulding device (14),
**characterized in that**
the gripping device (52) has an engagement means (62, 63) in order to grip, in particular to engage behind, at least one projection (66) arranged on the blow-moulding device (14), in particular a cam, into which the gripping device (52) can move, wherein the projection (66) being set up and provided for centring the gripping device (52) with respect to the shaping station (8).

2. An apparatus (1) according to claim 1,
**characterized in that**
the gripping device (52) itself is in turn disposed on this arm in a pivotable or rotatable manner.

3. An apparatus according to claim 1 or 2,
**characterized in that**
at least one of these pivot axes (A1, A2... A6) is stationary and this stationary pivot axes (A1, A2... A6) is preferably oriented vertically.

4. An apparatus according to at least one of the preceding claims,
**characterized in that**
at least one pivot axes (A1, A2... A6) is disposed in a spatially fixed plane independently of a position of the changing device and/or the gripping device, in particular wherein this spatially fixed plane is a horizontal plane.

5. An apparatus according to at least one of the preceding claims,
**characterized in that**
at least one pair of pivot axes (A1, A2... A6) are provided wherein these pivot axes (A1, A2... A6) are perpendicular to one another independently of a position of the changing device and/or the gripping device or at least two pivot axes (A1, A2... A6) are disposed parallel to one another independently of a position of the changing device and/or the gripping device.

6. An apparatus (1) according to claim 1,
**characterized in that**
the pivotable arm (54) is arranged on a further arm (56) pivotable about at least one pre-set pivot axis.

7. An apparatus according to the preceding claim,
**characterized in that**
the projection (66) is disposed within a pitch circle described by a centre point of a container.

8. An apparatus according to claim 7,
**characterized in that**
the gripping device (52) has a guide element (62), wherein the guide element (62) can be guided over a corresponding surface of the blow mould device, and wherein the guide element (62) has at least on recess which is disposed in the guide element (62) and can engage behind the projection (66) for changing the blow mould device, so that the guide element (62) also serves for supporting the blow mould device (14).

9. An apparatus (1) according to at least one of the preceding claims,
**characterized in that**
the gripping device (52) is capable of being connected to the blow moulding device (14) in a positively and/or non-positively locking manner.

10. An apparatus (1) according to at least one of the preceding claims,
**characterized in that**
the changing device (40) has a control device (42) which performs a removal of the blow moulding device from the blow mould carriers and/or an arranging of the blow moulding device on the blow mould carriers in a manner controlled with respect to both force and distance travelled.

11. An apparatus (1) according to claim 1,
**characterized in that**
the gripping device (52) permits the creation and/or release of a connection present between component parts (14a, 14b, 14c) of the blow moulding device (14).

12. A method of operating a shaping device (1) for the shaping of plastics material pre-forms (10) into plastics material containers (20) according to at least one of the preceding claims, wherein the plastics material pre-forms (10) are conveyed in a working operation of the apparatus (1) along a pre-set conveying path by means of a plurality of shaping stations (8) and are expanded to form the plastics material containers (20) by being acted upon with a flowable medium, wherein in order to expand the plastics material pre-forms (10) use is made of blow moulding devices (14) in the interior of which the plastics material pre-forms (10) are expanded to form the plastics material containers (20), wherein at least one of the blow moulding devices (14) is removed in a changing operation from the apparatus (1) and/or one of the blow moulding devices (14) is arranged on a blow mould carrier (16) of the apparatus (1),
wherein in order to change the blow moulding devices (14) use is made of a changing device (40) which has a gripping device (52) for gripping the blow moulding device (14), wherein this gripping device (52) is movable in at least two different directions and is pivotable about at least three pivot axes (A1, A2 ... A6),
**characterized in that**
the gripping device (52) has an engagement means (62, 63) in order to engage behind a cam, into which the gripping device (52) can move, wherein the projection (66) being set up and provided for centring the gripping device (52) with respect to the shaping station (8).

13. A method according to claim 12,
**characterized in that**
at least two blow mould support parts (16a, 16b) of a blow mould support (16) can be pivoted apart in order to open the blow mould device (14) and then the blow moulding device (14) is removed during a changing operation.

## Revendications

1. Dispositif de mise en forme de préformes en matière plastique (10) pour obtenir des récipients en matière plastique (20) avec un dispositif de transport (2) qui transporte les préformes en matière plastique (10) le long d'un chemin de transport prédéfini, le dispositif de transport (2) présentant un support de station (12) mobile et au moins placé au milieu sur un support de base (6) stationnaire, sur lequel se trouve une pluralité de stations de mise en forme (8), les stations de déformation (8) comprenant respectivement des dispositifs de moulage par soufflage (14) formant respectivement des cavités à l'intérieur desquelles les préformes en matière plastique (10) pouvant être mise en forme pour obtenir des récipients en matière plastique et ces dispositifs de moulage par soufflage se trouvant respectivement sur des supports de moulage par soufflage (16),
le dispositif (1) présentant un dispositif de changement (40) qui est adapté et conçu pour au moins éloigner les dispositifs de moulage par soufflage de leurs supports de moulage par soufflage (16) et/ou disposer les dispositifs de moulage par soufflage sur les supports de moulage par soufflage (16), ce dispositif de changement (40) présentant un dispositif de préhension (52) pour saisir le dispositif de moulage par soufflage (14), ce dispositif de préhension (52) pouvant se déplacer dans au moins deux directions différentes et pouvant pivoter sur au moins trois axes de pivotement (A1, A2...A6) différents, le dispositif de préhension étant disposé sur un bras (54) qui peut pivoter autour d'au moins un axe de pivotement prédéterminé (A1, A2 ... A6) et le dispositif de changement est adapté pour éventuellement changer un dispositif de soufflage complet ou uniquement des parties (14a, 14b, 14c) du dispositif de soufflage (14),
**caractérisé en ce que**
le dispositif de préhension (52) présente un moyen d'engagement (62, 63) pour s'engager derrière au moins une saillie (66) agencée sur le dispositif de soufflage (14), c'est-à-dire une came, dans laquelle le dispositif de préhension (52) est rétractable, dans lequel la saillie (66) est agencée et prévue pour centrer le dispositif de préhension (52) par rapport au poste de reformage (8).

2. Dispositif (1) selon la revendication 1,
**caractérisé en ce que**
le dispositif de préhension (52) lui-même est agencé de manière pivotante ou rotative sur ce bras (54).

3. Dispositif (1) selon la revendication 1 ou 2,
**caractérisé en ce que**
au moins un de ces axes de pivotement (A 1, A2 ... A6) est fixe, et cet axe de pivotement fixe (A3, A4) est de préférence aligné verticalement.

4. Dispositif (1) selon au moins l'une des revendications précédentes,
**caractérisé en ce que**
au moins un axe de pivotement (A 1, A2... A6) est disposé dans un plan spatialement fixe indépendamment d'une position du dispositif de changement et/ou du dispositif de préhension, en particulier dans lequel ce plan spatialement fixe est un plan horizontal.

5. Dispositif (1) selon au moins l'une des revendications précédentes,
**caractérisé en ce que**
au moins une paire d'axes de pivotements (A 1, A2 ... A6) est disponible, moyennant quoi ces deux axes de pivotement (A 1, A2 ... A6) sont perpendiculaires l'un à l'autre indépendamment d'une position du dispositif de changement et/ou du dispositif de préhension, ou au moins deux axes de pivotement (A 1, A2 ... A6) sont indépendants d'une position du dispositif de changement et/ou du dispositif de préhension, sont disposés parallèlement les uns aux autres.

6. Dispositif (1) selon la revendication 1,
**caractérisé en ce que**
le bras pivotant (54) est disposé sur un autre bras (56) pivotant autour d'au moins un axe de pivotement prédéterminé.

7. Dispositif (1) selon la revendication précédente,
**caractérisé en ce que**
la saillie (66) est disposée à l'intérieur d'un cercle primitif décrit par un point central du conteneur.

8. Dispositif (1) selon la revendication 7,
**caractérisé en ce que**
le dispositif de préhension (52) présente un élément de guidage (62), dans lequel l'élément de guidage (62) peut être guidé sur une surface correspondante du dispositif de soufflage, et dans lequel l'élément de guidage (62) présente au moins un évidement agencé dans le l'élément de guidage (62) utilisé pour changer le dispositif de soufflage s'engage derrière la saillie (66) de sorte que l'élément de guidage (62) est également conçu pour porter le dispositif de soufflage (14).

9. Dispositif (1) selon au moins l'une des revendications précédentes,
**caractérisé en ce que**
le dispositif de préhension (52) peut être relié au dispositif de moulage par soufflage (14) par emboîtement et/ou emboîtement à force.

10. Dispositif (1) selon au moins l'une des revendications précédentes,
**caractérisé en ce que**
le dispositif de changement (40) présente un dispositif de commande (42) qui retire le dispositif de soufflage des supports de moule de soufflage et/ou dispose le dispositif de soufflage sur les supports de moule de soufflage d'une manière commandée en force et en déplacement.

11. Dispositif (1) selon la revendication 1,
**caractérisé en ce que**
le dispositif de préhension (52) permet d'établir et/ou de libérer une liaison existant entre des composants (14a, 14b, 14c) du dispositif de soufflage.

12. Procédé pour le fonctionnement d'un dispositif de mise en forme (1) pour mettre en forme des préformes en matière plastique (10) pour obtenir des récipients en matière plastique (20) selon au moins l'une des revendications précédentes, dans lequel, dans un mode de fonctionnement du dispositif (1), les préformes en matière plastique (10) étant transportées, au moyen d'une pluralité de stations de mise en forme (8), le long d'un chemin de transport prédéfini et étant développées, par contact avec un milieu fluide, en récipients en matière plastique (20), dans lequel, pour le développement des préformes en matière plastique (10), on utilise des dispositifs de moulage par soufflage (14) à l'intérieur desquels les préformes en matière plastique (10) étant développées en récipients en matière plastique (20), dans lequel, dans un mode de changement, au moins l'un des dispositifs de moulage par soufflage (14) étant enlevé du dispositif (1) et/ou l'un des dispositifs de moulage par soufflage (14) étant placé sur un support de moulage par soufflage (16) du dispositif (1),
dans lequel, un dispositif de changement (40) étant utilisé pour changer les dispositifs de moulage par soufflage (14), le dispositif de changement (40) présentant un dispositif de préhension (52) pour saisir le dispositif de moulage par soufflage (14), ce dispositif de préhension (52) pouvant se déplacer dans au moins deux directions différentes et pouvant pivoter sur au moins trois axes de pivotement (A1, A2...A6),
**caractérisé en ce que**
le dispositif de préhension (52) présente un moyen d'engagement (62, 63) pour engager derrière au moins une saillie (66) disposée sur le dispositif de soufflage (14), une came dans laquelle le dispositif de préhension (52) peut être rétracté, la saillie (66) est agencée et prévue pour centrer le dispositif de préhension (52) par rapport au poste de reformage (8).

13. Procédé selon la revendication 12,
**caractérisé en ce que**
deux parties de support de moule de soufflage (16a, 16b) d'un support de moule de soufflage (16) sont écartées pour ouvrir le dispositif de soufflage (14), puis le dispositif de soufflage (14) est retiré pendant le fonctionnement en alternance.
